(19) Europäisches Patentamt / European Patent Office / Office européen des brevets

(11) **EP 3 642 692 B1**

(12) **EUROPEAN PATENT SPECIFICATION**

(45) Date of publication and mention
of the grant of the patent:
**13.10.2021 Bulletin 2021/41**

(21) Application number: **17736632.5**

(22) Date of filing: **30.06.2017**

(51) Int Cl.:
*G06F 3/01* (2006.01)     *A47F 11/06* (2006.01)
*H04N 5/272* (2006.01)    *H04N 13/00* (2018.01)
*G02B 27/01* (2006.01)    *G02B 30/27* (2020.01)
*H04N 5/222* (2006.01)

(86) International application number:
**PCT/EP2017/066376**

(87) International publication number:
**WO 2019/001745 (03.01.2019 Gazette 2019/01)**

(54) **SYSTEM AND METHOD FOR INTERACTING WITH A USER VIA A MIRROR**

SYSTEM UND VERFAHREN ZUM INTERAGIEREN MIT EINEM BENUTZER ÜBER EINEN SPIEGEL

SYSTÈME ET PROCÉDÉ POUR INTERAGIR AVEC UN UTILISATEUR VIA UN MIROIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.04.2020 Bulletin 2020/18**

(73) Proprietor: **Huawei Technologies Co., Ltd.
Longgang District
Shenzhen, Guangdong 518129 (CN)**

(72) Inventors:
• **CHU, Yun Yaw
  80992 Munich (DE)**
• **DANGY-CAYE, Nicolas
  80992 Munich (DE)**

(74) Representative: **Körber, Martin Hans
Mitscherlich PartmbB
Patent- und Rechtsanwälte
Postfach 33 06 09
80066 München (DE)**

(56) References cited:
**US-A1- 2016 343 166     US-A1- 2017 188 020**

• **DIEGO MARTINEZ PLASENCIA ET AL: "Through
the combining glass", USER INTERFACE
SOFTWARE AND TECHNOLOGY, ACM, 2 PENN
PLAZA, SUITE 701 NEW YORK NY 10121-0701
USA, 5 October 2014 (2014-10-05), pages 341-350,
XP058058508, DOI: 10.1145/2642918.2647351
ISBN: 978-1-4503-3069-5**

**Description**

TECHNICAL FIELD

Various embodiments of the disclosure relate to an interactive system. More specifically, various embodiments of the disclosure relate to a method and system for interacting with a user via a mirror.

BACKGROUND

Recent developments in interactive digital consumer products have seen a move towards making day-to-day objects more interactive. Users are increasingly using the devices for checking their e-mails, weather information, traffic routes, etc. For example, users can now check personalized information related to weather, schedule for days (weeks, or months) on their devices. Further, some of the applications on these devices may enable users to read news, traffic information, and a day's calendar, among other information on their devices.

However, there are several inactive devices that a user may use during the day. These inactive devices range from mirrors that the users use to see themselves in the morning to glass tables in restaurants, offices, and at home. Given the focus on increasing the interactive nature of inactive devices, there is a need for these (or similar) inactive devices to become active and provide more information to the user in real time.

Patent application US20160093081 A1 a device including a display configured to display an object at an object display location on the display, the object being associated with information to be provided to a user, and to provide a reflected user image at a reflected user image location on the display; and a processor configured to detect the reflected user image location, and to determine the display location of the object based on the reflected user image location.

The document US 2017/0188020 A1 shows a mirror display system. Especially, it discloses a method for interacting with a system comprising a two-way reflective mirror and a 3D display being placed behind the mirror to display a virtual object combined with the reflective imagine of the user on the mirror. The system uses the distance between the user and the mirror for evaluating the optimum parallax, at which the virtual object is displayed in the same focal plane as the reflected imagine.

The document Diego Martinez Plasencia Et. Al.: "Through the combining glass" shows different optical illusions to generate virtual objects overlaying the real world. By these means, augmented reality objects are shown.

The document US 2016/0343166 A1 shows an imagine-capturing system for combining a subject and three-dimensional virtual space in real time. Especially, the reflection of a person is displayed by a mirror, while additional background is displayed by a display.

SUMMARY

It is an object of the invention to provide a system and method for interacting with a user via a mirror.
The foregoing and other objects are achieved by the subject matter of the independent claims. Further implementation forms are apparent from the dependent claims, the description and the figures.

BRIEF DESCRIPTION OF THE DRAWINGS

Further embodiments of the invention will be described with respect to the following figures, in which:

FIG. 1 shows an example schematic diagram of a smart mirror according to some aspects of an embodiment;

FIG. 2 shows an example smart mirror solution;

FIG. 3 shows another example smart mirror solution;

FIG. 4 shows a schematic diagram ot a smart mirror system according to some aspects of an embodiment;

FIG. 5a snows a schematic diagram of dynamic parallax barrier generation mechanism according to some aspects of an embodiment;

FIG. 5b shows a schematic diagram of a dynamic parallax barrier generation mechanism according to some aspects of an embodiment;

FIG. 5c shows a schematic diagram of a dynamic parallax barrier generation mechanism according to some aspects of an embodiment;

FIGs. 6a-6g show a schematic diagram of a smart mirror system according to some aspects of various embodiments;

FIG. 7 shows a schematic diagram of a smart mirror system according to some aspects of various embodiments;

FIG. 8 shows a schematic diagram of a smart mirror system according to some aspects of an embodiment;

FIG. 9 shows a schematic diagram of a smart mirror system according to some aspects of an embodiment;

FIG. 10 shows a schematic diagram of creating user's avatar by a smart mirror system according to some aspects of an embodiment.

FIG.s 11a-11c show a content hierarchy mechanism provided by a smart mirror system according to some aspects of various embodiments;

FIG.s 12a-12b show a schematic diagram of an algorithm for gesture recognition according to some aspects of various embodiments;

FIG. 13 shows a schematic diagram of a smart mirror system according to some aspects of an embodiment;

FIG. 14 shows a schematic diagram of an algorithm for a smart mirror system according to some aspects of an embodiment;

FIG. 15 shows a user case ot a smart mirror system according to some aspects of an embodiment;

FIG. 16 shows a schematic diagram ot a smart mirror system according to some aspects of an embodiment;

FIG. 17a-17b show a user case ot a smart mirror system according to some aspects of an embodiment;

FIG. 18 shows a user case ot a smart mirror system according to some aspects of an embodiment;

FIG. 19 shows a user case of a smart mirror system according to some aspects of an embodiment;

FIG. 20 shows a user case of a smart mirror system according to some aspects of an embodiment;

FIG. 21 shows a user case of a smart mirror system according to the claimed invention;

FIG.s 22a-22c show a user case of a smart mirror system according to some aspects of an embodiment;

FIG.s 23a-23c show a user case of a smart mirror system according to some aspects of an embodiment;

FIG.s 24a-24c show a user case of a smart mirror system according to some aspects of an embodiment;

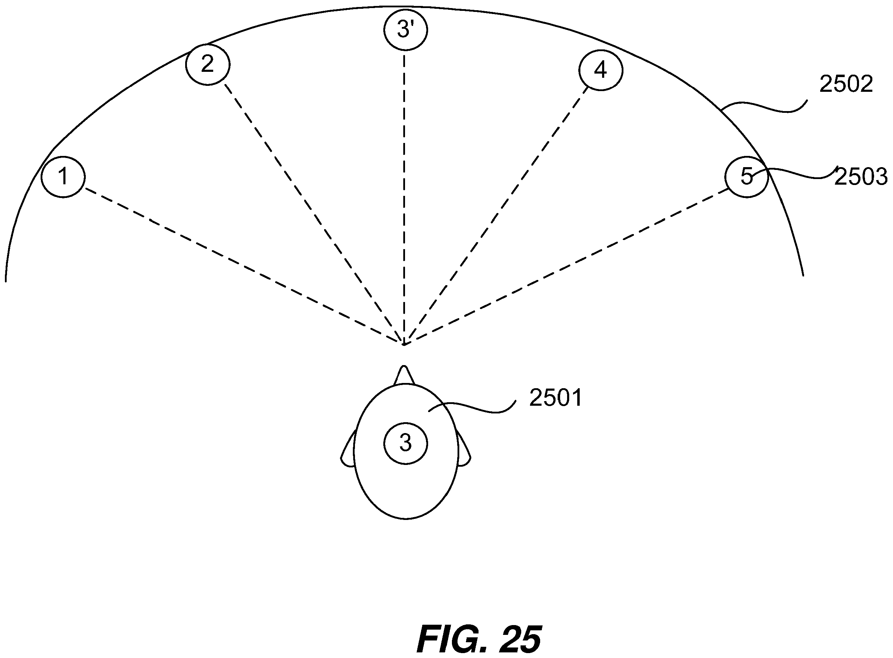

FIG. 25 shows a schematic diagram of a smart mirror system having a curved display surface according to some aspects of an embodiment;

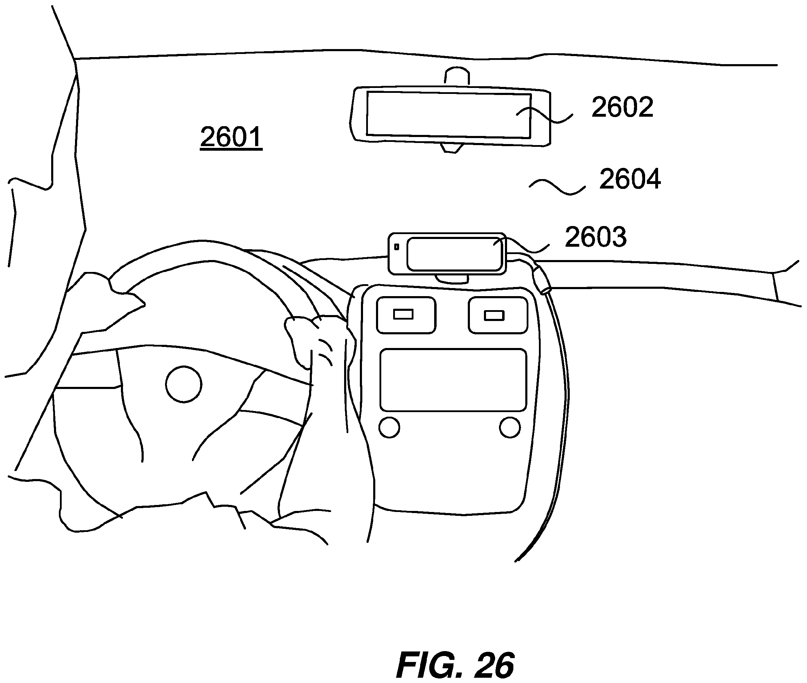

FIG. 26 shows a smart mirror system being applied to various display means; and

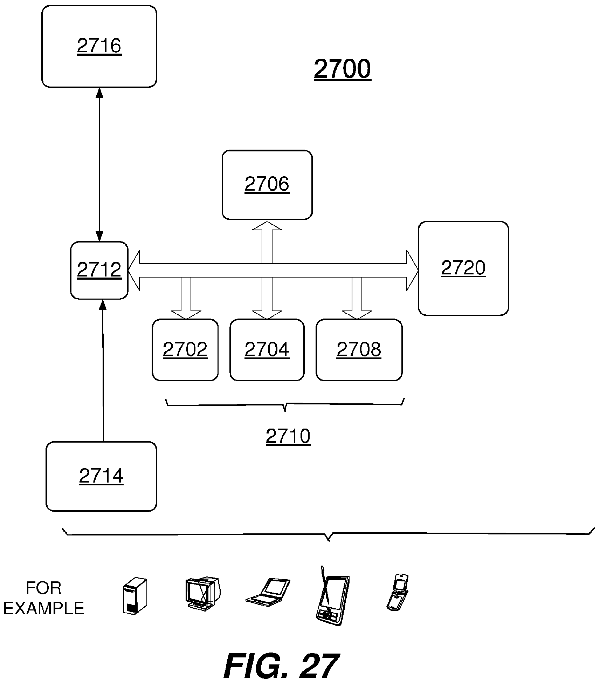

FIG. 27 shows illustrative computing functionality that can be used to implement any aspect of the features shown in the foregoing drawings.

In the figures identical reference signs are used for identical or at least functionally equivalent features.

DETAILED DESCRIPTION OF EMBODIMENTS

Augmented reality (AR) enhances user experience by superposing virtual objects on a user view scene. AR is a live direct or indirect view of a physical, real-world environment whose elements are augmented (or supplemented) by computer-generated sensory input such as sound, video, graphics or GPS data.

Most of the existing AR solutions require external devices such as see-through glasses or smartphones/tablets. These devices bear limitations. The glasses are not comfortable to wear, e.g. heavy. 3D rendering is also a difficult task for physiological reasons. Battery remains a challenge for continuous functioning of these external devices. A clipped view limited by a relative small screen (smartphone or tablet screen) is not capable of giving an immersive experience.

A mirror is a common object that is regularly used in daily life. Enriching the reflected scene with useful information can be done. The primary function remains unchanged and augmented reality can be switched on/off according to a user's wish. This approach is normally not considered as intrusive and is naturally accepted by users as it is seamless and useful.

A two-way mirror is a mirror that is partially reflective and partially transparent. A two-way mirror is typically used as an apparently normal mirror in a brightly lit room, with a much darker room on the other side. People on the brightly lit side see their own reflection as they would be in front of a normal mirror. People on the dark side see through it as they were looking through a transparent window.

A virtual mirror or smart mirror is a device that displays a user's own image on a screen as if that screen was a mirror.

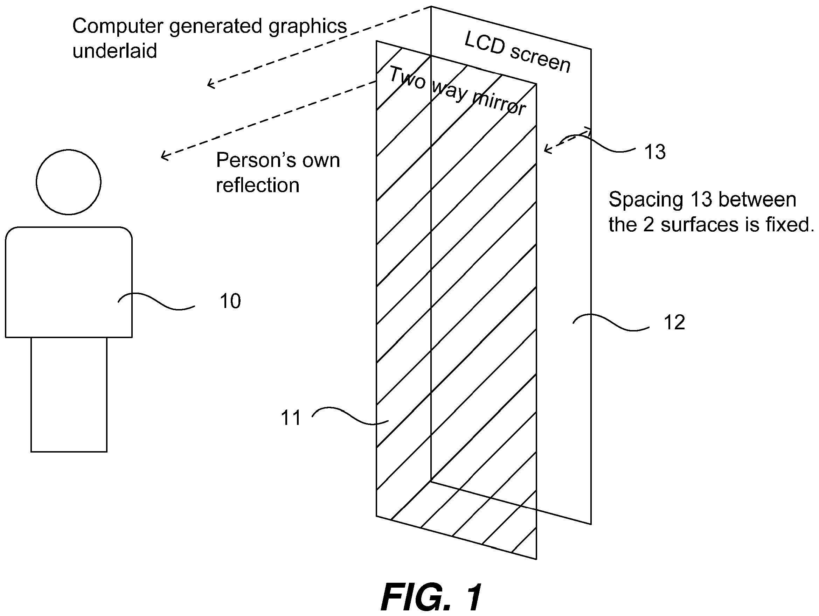

FIG. 1 illustrates a principle of a smart mirror. It is composed by a display layer 12, a two-way mirror 11 and a computing device (not shown) for graphics. The computing device graphically renders the virtual objects into the display 12 which is placed behind the two-way mirror 11. The two way mirror 11 lets graphical information from the display 12 pass through itself to a user 10 and reflects the real scene to the user 10 as well. Spacing 13 between the display layer 12 and the two way mirror 12 is conventionally fixed due to implementation. This spacing 13 has a direct influence on augmented reality immersion experienced by the user 10.

A first category of smart mirror can be classified as "widget-oriented" smart mirror. Superposed objects provide some useful information within the mirror. However, the superposed objects within the reflected image is only informative (e.g. a widget, or an image) and flat. The composition of these informative field (e.g. stocks, traffic) are mainly static and does not take into account user's reflection for instance.

A second category of smart mirror is focused on augmented reality experience. Such mirror augments reality by superposing makeup simulation on a user's face. However the composite image (e.g. user face + makeup) does not use real time reflected face on the mirror to create an interactive experience, but it is rather built from the user face caught by a camera within the smart mirror system.

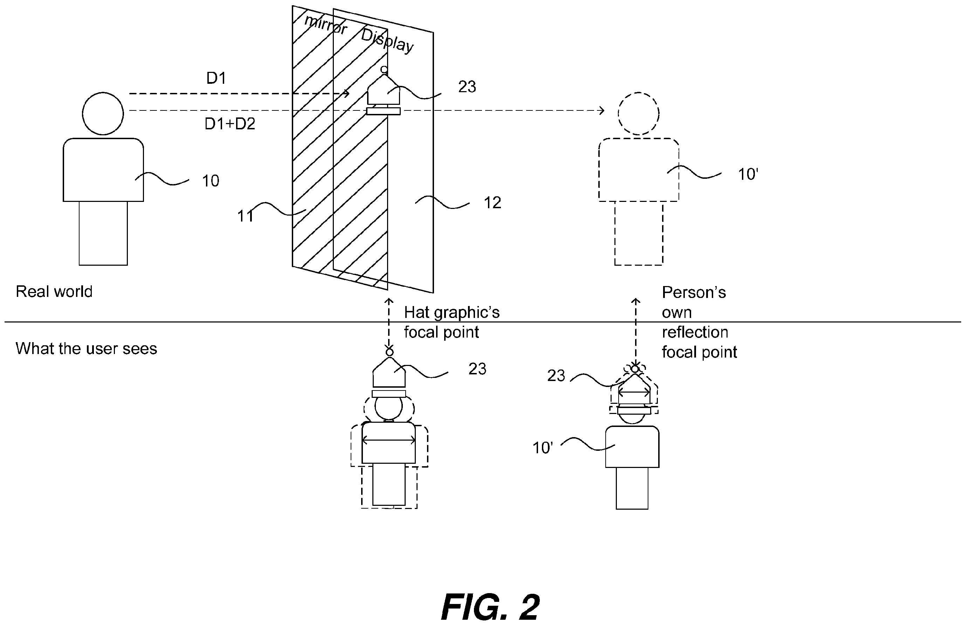

FIG. 2 illustrates a smart mirror implementation which may make it difficult to focus on digital graphics and natural reflection simultaneously.

Augmented reality is hard to achieve within a smart mirror. This is mainly explained by the distance of the user reflection and the display layer close to the mirror. If the user focuses on the virtual object then the scene behind becomes out of focus for the user. This is shown in the bottom part of FIG.2, left scene: the user 10 looks at the display screen focal point (i.e. hat graphic's focal point), where the hat graphic is focused and is perceived sharply. However the person's reflection is out of focus. On the other hand, if the user point of interest is on the reflected scene, the virtual object within the display layer loses focus to the user. This is illustrated in the bottom part of FIG.2, right scene: the user 10 looks at person's own reflection focal point, at which the person's reflection is in focus and perceived sharply. However the hat graphic is out of focus for the user. In both cases, augmented reality may be under achieved.

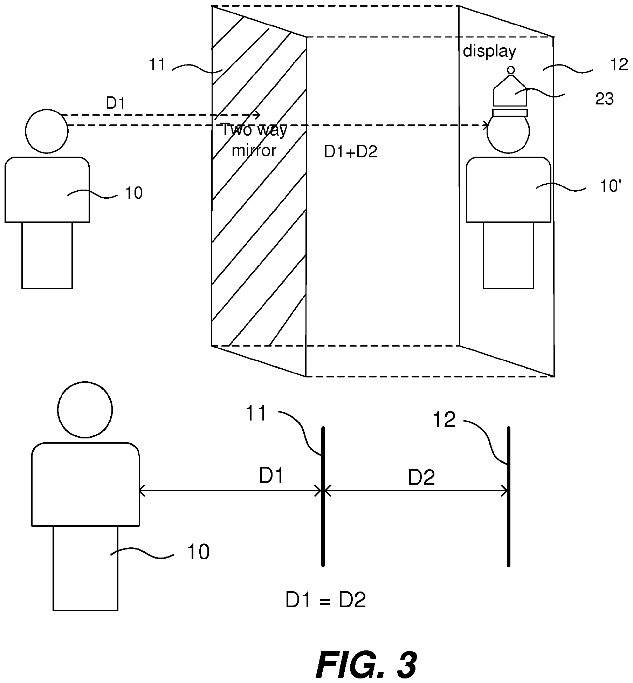

FIG. 3 illustrates a fixed distance solution. In one case, a first distance D1 separates user 10 from the semi-transparent mirror 11, and a second distance D2 separates the semi-transparent mirror 11 from the display device 12. The user 10 will perceive his reflected virtual image 10' as occurring at a depth of 2xD1. The setup of the system may be arranged so that the user, when using the mirror, is at a distance D1 from the mirror, wherein the distance D1 is approximately equal to the second distance D2. Such fixed distance solution, can by making D1 approximately equal to D2 allows to achieve an improved augmented reality experience. Without limitation in an exemplary implementation, for instance, both D1 and D2 may be approximately equal to 3 feet. However, in this case the user position is constraint by the system hardware setup. For example, if the distance of D1 varies as the user 10 stands further away from the mirror 11, D1 becomes substantially unequal to D2 which is fixed by design. Then a problem of eye accommodation to the user as illustrated by Fig. 2 may come back again. In this case, augmented reality may be under achieved. It is contemplated that a design to release user from position constraint can be employed as illustrated by this disclosure to enrich augmented reality experience for users.

In the following detailed description, reference is made to the accompanying drawings, which form a part of the disclosure, and in which are shown, by way of illustration, specific aspects in which the present invention may be practiced. scope of the present invention is defined by the appended claims.

Smart mirror system proposed by this disclosure provides various embodiments. In some embodiments, perception of holographic augmented reality may be improved by combining computer vision, autostereoscopy, 3D rendering and real world reflection. Autostereoscopy is any method of displaying stereoscopic images without the use of special headgear or glasses on the part of the viewer. Because headgear is not required, it is also called "glasses-free 3D" or "glassesless 3D". Such mechanism can be applied for various circumstances, e.g. home, vehicles. In some embodiments, mechanism is provided for one or more users to avoid seeing stereoscopic artifacts by automatically adapt holographic effects optimally for each user. In some embodiments, the smart mirror system allows multiple users' interaction simultaneously. In some embodiments, constraint with the distance between display and mirror is compensated by using adjustable parallax filtering and/or display resolution. In some embodiments, the system may automatically calibrate the perspective camera(s) in the 3D virtual mechanism according to the eyes separation distance, which may vary for different users. Such a mechanism allows for each user a dedicated optimal calibration set, without manual configuration. In some embodiments, by detecting view of interest (e.g. using gaze tracking), the system can optimize the rendering process, e.g. devoting computing resources on specific areas or volumes in space instead of rendering graphics for the whole scene. Efficiency of resource consuming is thus improved. In some embodiments, computation workload can be reduced by creating the augmented effect only on regions of interest. In some embodiments, a common use case is leveraged, e.g. looking at a mirror, user actually sees his/her own reflection manipulating virtual object(s). Thus the system may create an intuitive connection between the physical and virtual world. This may contrast with other augmented reality solutions that requires the user to look at a screen turning their head away while manipulating virtual objects in the air. Such other solutions normally require some adaptation from user(s).

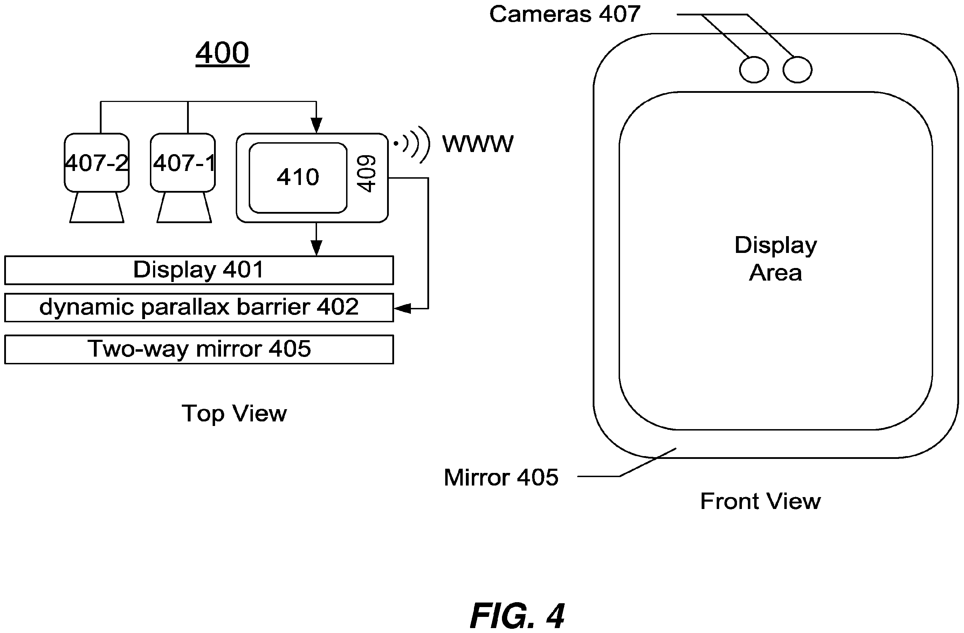

FIG. 4 shows a schematic diagram of a smart mirror system 400 according to some aspects of an embodiment. The system 400 relies on the basis of a processing sub-system 409 (e.g. a processor), which may incorporate a graphic engine/smart mirror engine 410, connected to a display 401 placed behind a two-way mirror or semi-transparent surface 405. The mirror is semi-transparent, in particular transparent to the light emitted by the display. In addition to this basis, an image capture arrangement 407 (e.g. a camera system with one/dual/more cameras) and optionally an autostereoscopy arrangement 402 (e.g. a dynamic parallax barrier or lenticular lens) are coupled to the processor 409. A parallax barrier is a device placed in front of an image source, such as a liquid crystal display, to allow it to show a stereoscopic or multi-scopic image without the need for the viewer to wear 3D glasses. Placed in front of the normal LCD, it consists of an opaque layer with a series of precisely spaced slits, allowing each eye to see a different set of pixels, so creating a sense of depth through parallax in an effect similar to what lenticular printing produces for printed products and lenticular lenses for other displays. A lenticular lens is an array of magnifying lenses, designed so that when viewed from slightly different angles, different images are magnified. The most common example is the lenses used in lenticular printing, where the technology is used to give an illusion of depth, or to make images that appear to change or move as the image is viewed from different angles.

The two-way mirror 405 composes the augmented reality scene by reflecting the real scene and passing through the virtual objects of the display layer 401. The screen 401 displays the virtual objects of the augmented reality scene. The central processor 409 manages the camera inputs, the display and the parallax barrier outputs. One or several cameras (407-1, 407-2) are used for computer vision processing. The camera system 407 performs tasks such as face, eyes, gaze, gesture, hand tracking, face and object recognition. One or several cameras 407 can be used for depth frame acquisition which is used to bring estimation of the distance/position of user(s) facing the mirror or in general to estimate the distance/position of user(s) from a plane on which a two-way mirror may be positioned. A dynamic parallax barrier 405 is used to render autostereoscopy. A dynamic parallax barrier may be a transparent LCD device positioned in front of a color LCD 401. The dynamic parallax barrier display is controlled by the processor 409 to render vertical slits arranged at a certain distance from each other and the colored pixels from the color LCD. The slits in the parallax barrier allow a viewer to see only left image pixels from the position of their left eye, right image pixels from the right eye. The processor can generate an optimal parallax pattern on the fly in accordance to the viewer's position.

The "Smart Mirror Engine", SME 410 that gathers a graphics and computer vision bundle plays an important role. It can process the cameras input (e.g. user position/distance, eyes distance, gaze, gesture tracking, point of interest, face and object recognition). It is a graphic engine that can optimize the superposed layers within the reflected scene and enhances the user experience through: 2D graphics, 2.5D graphics (perspective, parallax effects), 3D/Holographic (autostereoscopic technology).

One of the objectives of the SME 410 is to have good graphical rendering choice that enhances graphic user interface according to the gathered information from inputs. The description and operation of the SME 410 are further described in detail in the following.

The estimation of the user distance from the mirror plays an important element in the SME 410. This can be achieved by several means such as 3D cameras (e.g. dual camera), light based depth estimation (e.g. pattern projection, time of flight) or any other methods.

The system 400 may incorporate other functionalities (not shown), such as speaker, microphone, artificial Intelligence assistant. It is contemplated that many other consumer electronics functionalities known by those skilled in the art may be incorporated into the system 400 as well.

Various communication protocols may be supported by the system 400, including but not limited to Hyper Text Transfer Protocol (HTTP), Post Office Protocol (POP), Time Division Multiple Access (TDMA), Code Division Multiple Access (CDMA), Wireless Application Protocol (WAP), 3GPP communications technologies (e.g. GSM, WCDMA, LTE, LTE-A, 5G), Wi-Fi (the name of a popular wireless networking technology that uses radio waves to provide wireless high-speed Internet and network connections; Wi-Fi™ is a trademarked phrase that means IEEE 802.11x) and Bluetooth (a wireless technology standard for exchanging data over short distances, which is managed by Bluetooth Special Interest Group). BLUETOOTH™ is a Trademark owned by Telefonaktiebolaget LM Ericsson. It should be noted that the protocols listed above are provided as examples only; it is contemplated that many other protocols known by those skilled in the art may be supported by the system 400. In one embodiment, the system 400 is working as a Wi-Fi AP.

The dynamic parallax barrier is an important element to render auto stereoscopic 3D objects. Other technique could be used to render 3D objects such as Alioscopy lenticular array or 3D glasses. But the first mentioned technique is introduced for reasons: it is seamless or glass free; cheaper than lenticular approach; and last but not least, it brings a possible dynamic usage that will be detailed later in this disclosure.

In one embodiment, the system 400 combines dynamic autostereoscopic effect generation with computer vision acquisition technologies by using a transparent monochrome screen (e.g. a LCD screen) creating on the fly parallax barrier specifically to a user's position. The vision acquisition technologies include but is not limited to: face detection to estimate the person distance to the mirror and the person's position; gaze tracking to estimate user's view of interest in the scene; depth scanning for interpreting the real environment as a 3D scene; and body skeleton and/or gesture recognition to enable real and virtual world interaction.

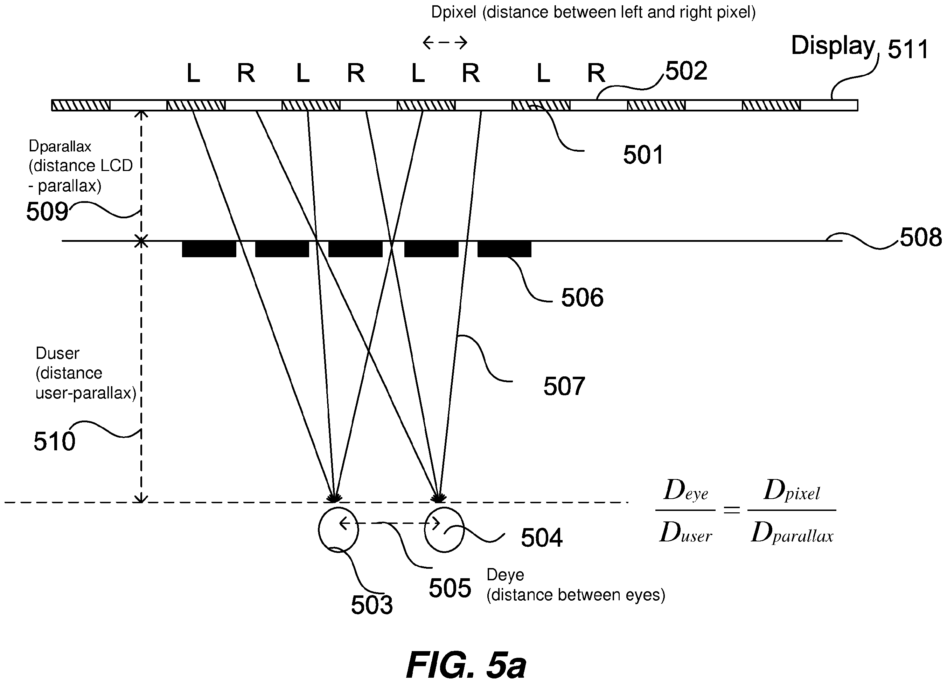

FIG. 5a shows a dynamic parallax barrier generation mechanism according to some aspects of an embodiment. To obtain good stereoscopic experience, we can minimize pixel interferences by positioning the parallax barrier 508 (including not see-through blocks 506) at a precise distance from the display 511 (e.g. a LCD screen, an OLED screen, an AMOLED screen) which corresponds to the display resolution. In the figure, Deye 505 represents distance between a user's left eye 503 and right eye 504, Duser 510 represents distance between the user and the parallax barrier 508, Dpixel represents distance between a left pixel 501 and a right pixel 502 adjustable by the display, Dparallax 509 represents distance between the display and the parallax barrier 508. These four parameters fulfill the following equation to facilitate good stereoscopic experience for the user:

$$\frac{D_{eye}}{D_{user}} = \frac{D_{pixel}}{D_{parallax}}.$$

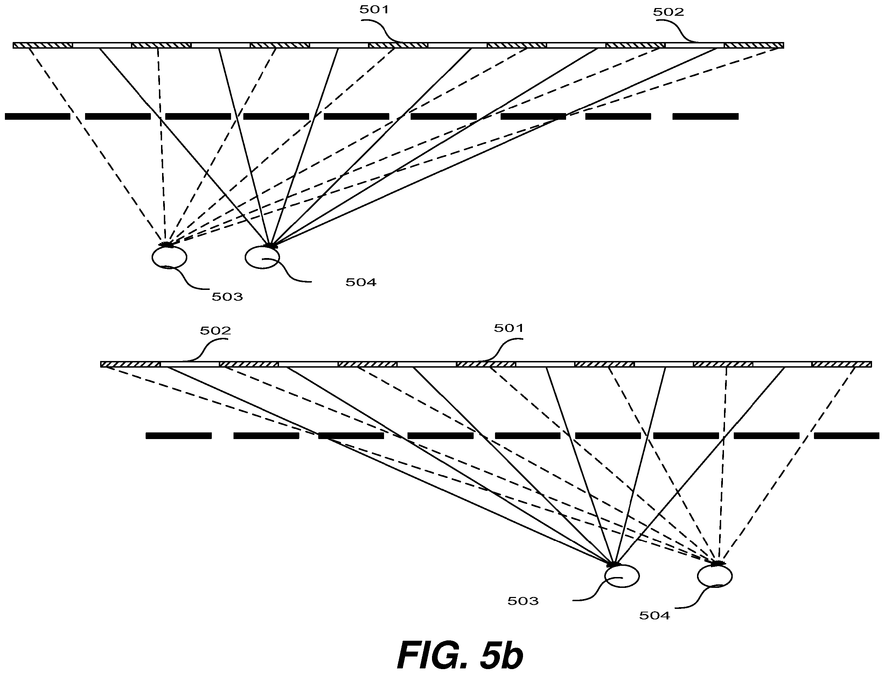

Similar to FIG. 5a, FIG. 5b shows a schematic diagram of a dynamic parallax barrier generation mechanism according to some aspects of an embodiment. Since a transparent monochrome screen is used for the parallax: by means of this screen it is possible to dynamically create any parallax pattern. Such a mechanism allows user's free movement on the left and right. For example, the system tracks the user's eyes positions and generates an adapted parallax barrier pattern on the mask screen (e.g. the transparent monochrome screen) to filter pixels for right eye 504 or left eye 503. Notice how the parallax barrier let pixel light pass at different locations between the 2 figures.

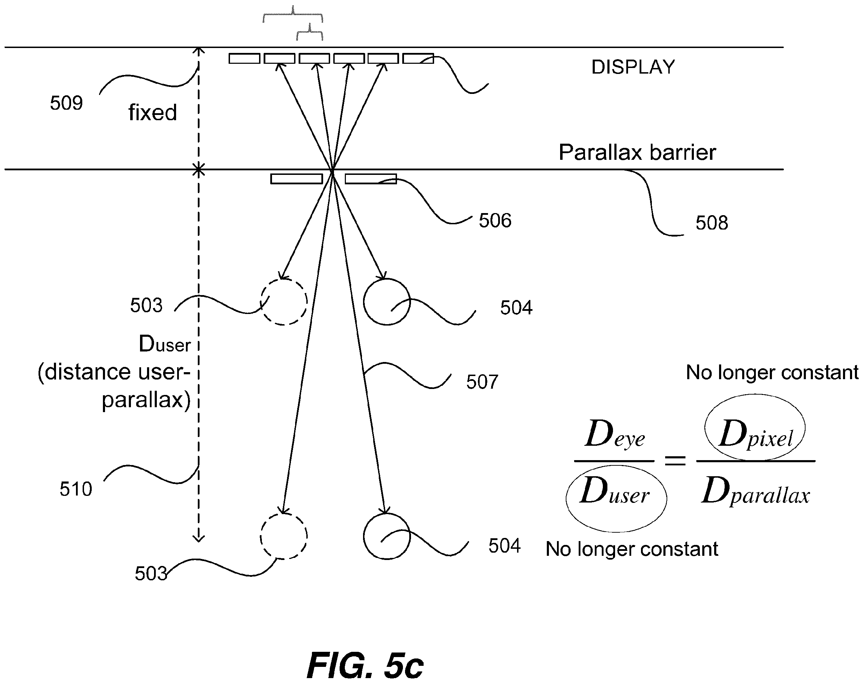

Similar to FIG. 5a, FIG. 5c shows a schematic diagram of a dynamic parallax barrier generation mechanism according to some aspects of an embodiment. To dynamically adapt to user distance Duser, it is proposed to proportionally adapt the display resolution of graphics Dpixel. The four parameters keep fulfilling the following equation to facilitate good stereoscopic experience for the user:

$$\frac{D_{eye}}{D_{user}} = \frac{D_{pixel}}{D_{parallax}}.$$

Such a mechanism allows user's free movement near and far. For example, the system tracks the user's positions and generate an adapted parallax barrier pattern on the mask screen to filter pixels for the user.

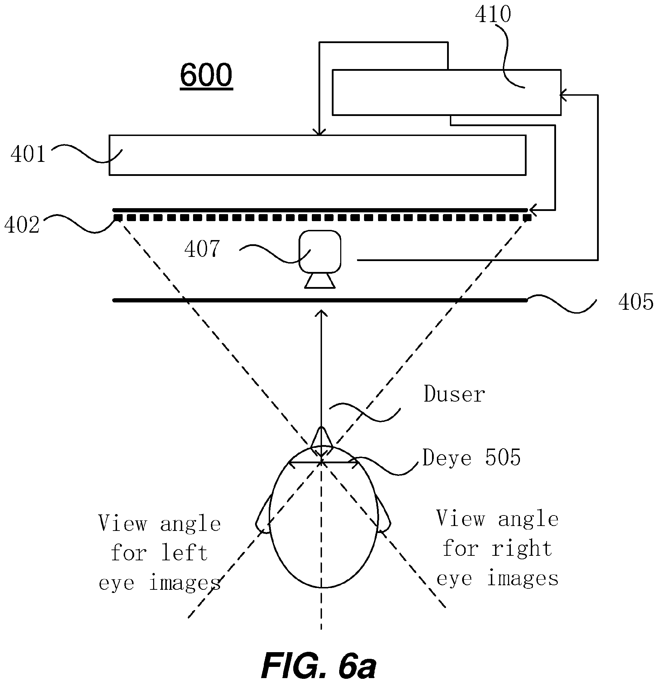

FIGs. 6a-6d shows a smart mirror system 600 according to some aspects of embodiments of this disclosure. The computing device 410 (e.g. SME) uses computer vision (e.g. camera system 407) to track the user's head position in space. Then the face distance from the two-way mirror 405 (i.e. Duser) is known. SME 410 also controls a parallax barrier 402 (e.g. a transparent LCD which can display any parallax barrier pattern) to filter emitted pixel lights coming from the display 401 (e.g. a RGB display) to a specific angle. When the system 600 detects the user standing in front of the mirror 405, it generates parallax barrier pattern(s) according to mechanism aforementioned in FIGs. 5a-5c. Meanwhile, the computing device 410 can generate 3D frames to be displayed on the display 401.

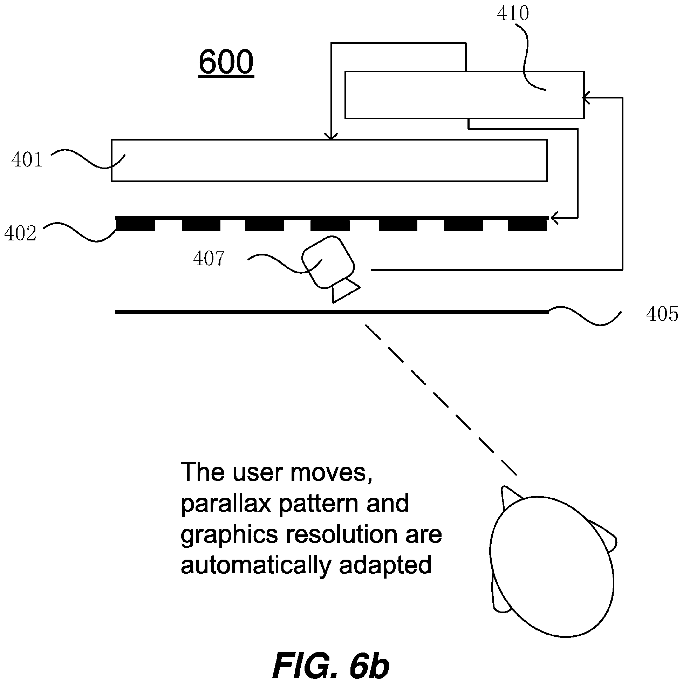

When the user moves (see e.g. FIG. 6b), the system automatically adapts parallax pattern on the parallax barrier 402 and graphics resolution on the display 401 in accordance with the user's position. Optionally, the parallax barrier functionality 402 can be switched on/off (automatically or manually) to accommodate user's requirements.

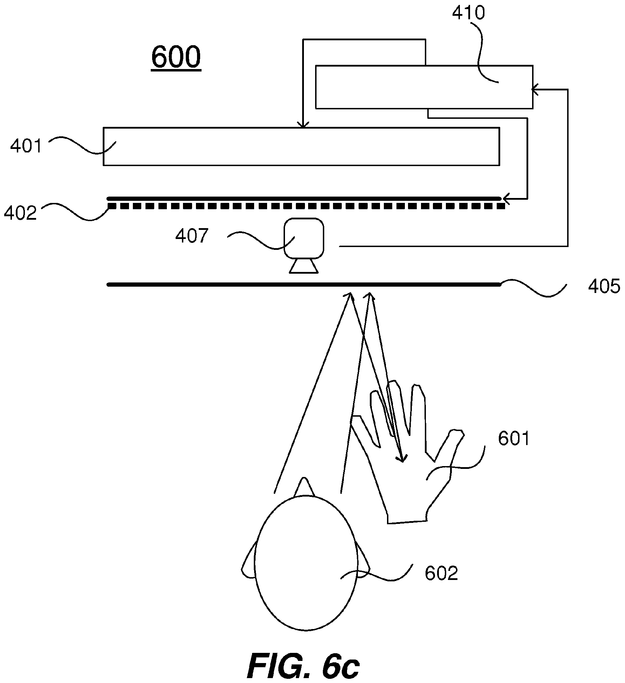

The system can be configured to identify zone of interest (see FIG. 6c). It may use gaze tracking functionalities (e.g. via camera functionalities 407) to evaluate gaze direction in space. It may also evaluate the view of interest in a 3D map according to gaze vectors. For example, the computing device 410 uses computer vision techniques (e.g. camera system 407) to track the user's gaze direction. It can be expressed as two vectors in a 3D space, one vector for each eye; or by using the head orientation. Optionally, by utilizing the output from the above process, depth mapping and a detected face position in space, the system can evaluate the subjective field of view for the user, and thus estimate where the person is specifically looking at (i.e. the view of interest). In FIG. 6c, user 602 is looking at the palm of right hand 601 facing up. For example, the camera system 407 identifies such zone of interest (i.e. palm of right hand 601), and provides such information to the computing device 410. The computing device 410 can act accordingly, e.g. provide instructions to display 401, and/or barrier 402 to cause them act accordingly.

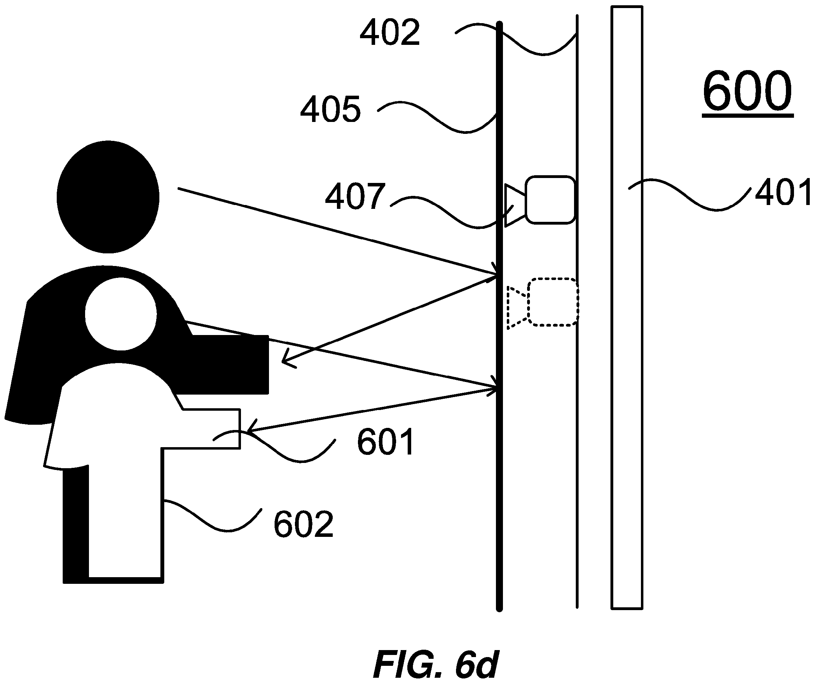

In another embodiment, see FIG. 6d, subjective fields of view can be evaluated for multiple users using face detection and gaze tracking along with known structural parameters of the system (e.g. camera and/or mirror specifications)

## User Cases

In a single user scenario, the system acquires real time depth imaging of the user's body. The frames are typically depth frames. RGB-D format frames may be used. The system gathers the point cloud related to the user's body and computes the point cloud that correlates with the relevant part of the user's body: the head, the fore arms and the hands. Tracking the head is a simpler task as the user should remain relatively static in front of the mirror, at a minimal height, whereas hands detection has greater dynamics. However head detection helps arms and hands detection by taking into account human morphology. This method allows discriminating point cloud from moveable objects, or animals in front of the smart mirror. By tracking hands, the system allows the user to interact with virtual objects through the user's self-reflection.

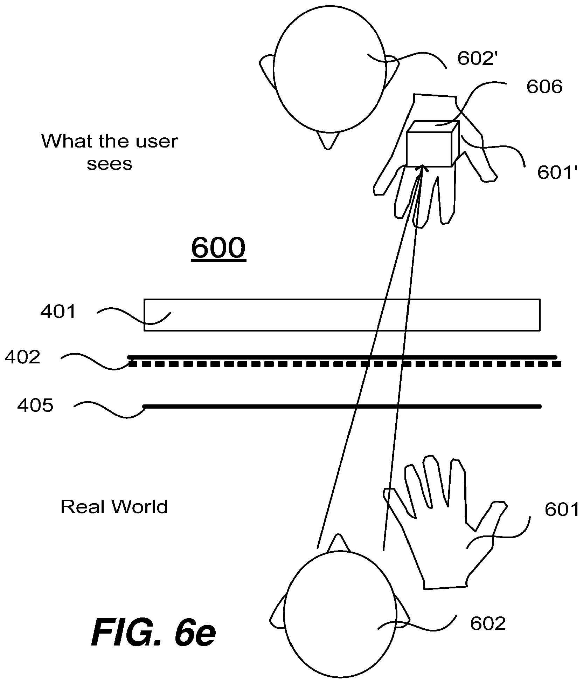

FIG. 6e shows a smart mirror system 600 create augmented reality content according to some aspects of an embodiment of this disclosure. As described above, the user 602 can perceive holographic object(s) 606 being placed in space in accordance to the person view of interest (e.g. palm of the hand 601) and the position in space of the hand. For example, in the real world, the user 602 raises his right hand 601. The user 602 sees from the mirror his own reflection (602', 601'). The system works as described above to generate graphics on the display 401, and to control barrier 402 working accordingly. From the user's eye, holographic object(s) can be seen placed on the palm of the hand 601'. Notice that in a case the user 602 stands close to the mirror 405, the virtual object 606 appears to the user 602 as presented between the mirror plane and the user's self-reflection 602'.

In simultaneous multi-users scenario, the system proceeds similarly as single user scenario in parallel for each user, except that holographic effect will be applied to mono-user areas on the smart mirror. The system can delimit areas by assigning the immediate areas which are in front of each user, or it can track gaze vectors and enable holographic effects to be applied anywhere on a smart mirror. The system creates a specific parallax barrier pattern for each user, as well as the interleaved RGB frames and displays respectively on each mono-user areas.

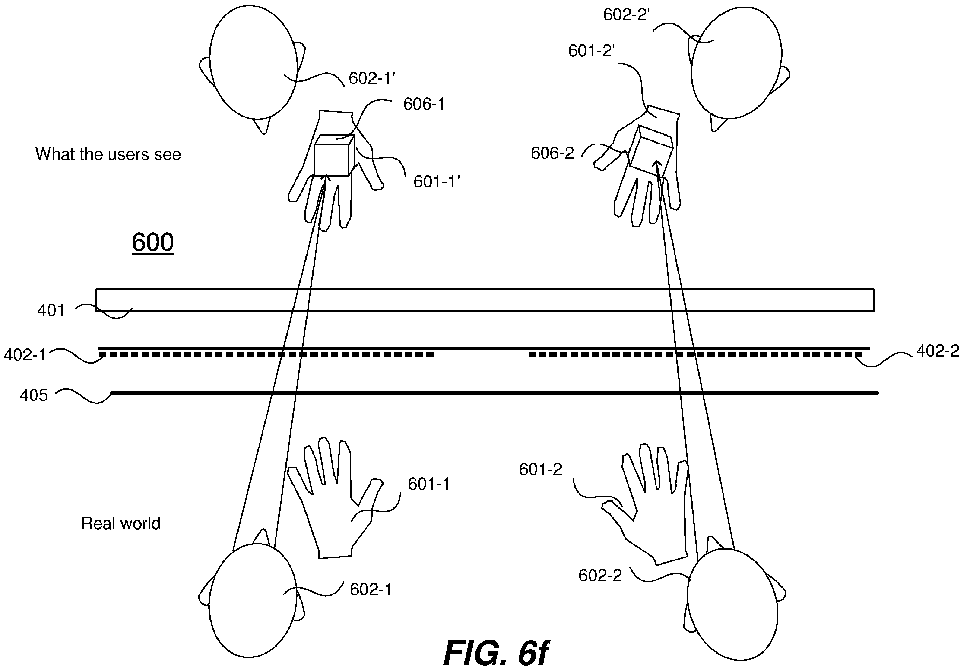

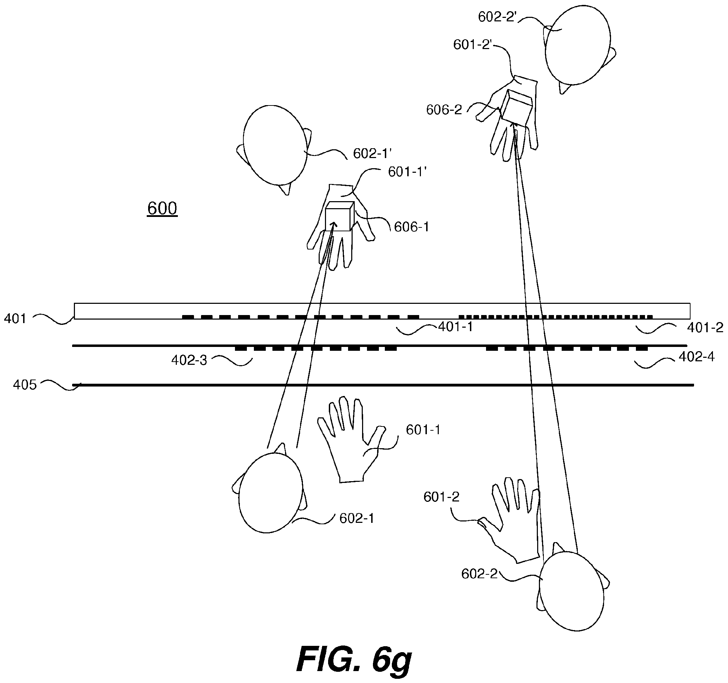

Figures 6f-6g show a smart mirror system 600 create augmented reality content according to some aspects of embodiments of this disclosure in cases of multi users. For example, if multiple users are detected, the system operates concurrently with generated barrier patterns and graphics (i.e. content and resolution) for each users. Since the parallax barrier screen is controllable by the computing system, multiple parallax patterns (402-1, 402-2) can be created with each one specific for each user at non overlapping regions of interest. Users may stand at different distances from the mirror, see e.g. FIG. 6g. Notice that in a case the user(s) stands close to the mirror, the virtual object appears to the user(s) as presented between the mirror plane and the users' self-reflection(s).

In the following, various functionalities/modules/user cases (and any combination) thereof are introduced to present variations/specifics of the smart mirror system proposed by this disclosure.

Full graphic (2D/2.5D/3D) engine

A system is proposed that creates augmented reality content which can be comfortably viewed with the natural reflection. The system automatically adapts the display of digital contents in accordance to the user contextual dynamic parameters (e.g. distance, gaze direction, customized calibration). The contents can either be displayed in holographic rendering thanks to autostereoscopic apparatus, or displayed in a pseudo depth perspective also referred as 2.5D. The system may take into account the side effect of visual discomfort when viewing stereoscopic content. Such discomfort is induced by the disparity of accommodation and eye convergence. To address this issue, the system can, by default, displays holographic contents which remain within a tolerance range of the disparity accommodation versus vergence, in order to minimize visual discomfort.

The system is also configured to carry out a method for realizing interaction with virtual objects. This is obtained by utilizing the natural reflection of the user to interact with the virtual objects, in place of rendering a 3D pointer. The user can manipulate virtual objects with the user's hands reflection, with an immediate visual feedback. This design interface is intuitive and quick to understand because the user sees self-acting on the augmented reality.

The system automatically adapts the stereoscopic contents according to the user proximity: when the user is at a far distance (parameterized) from the screen, holographic content is displayed in the front of the mirror under a near range from the mirror. When the user stands near the smart mirror, the system enters into an interactive mode with digital graphics appearing behind the mirror plane but appearing closer to the user's self-reflection.

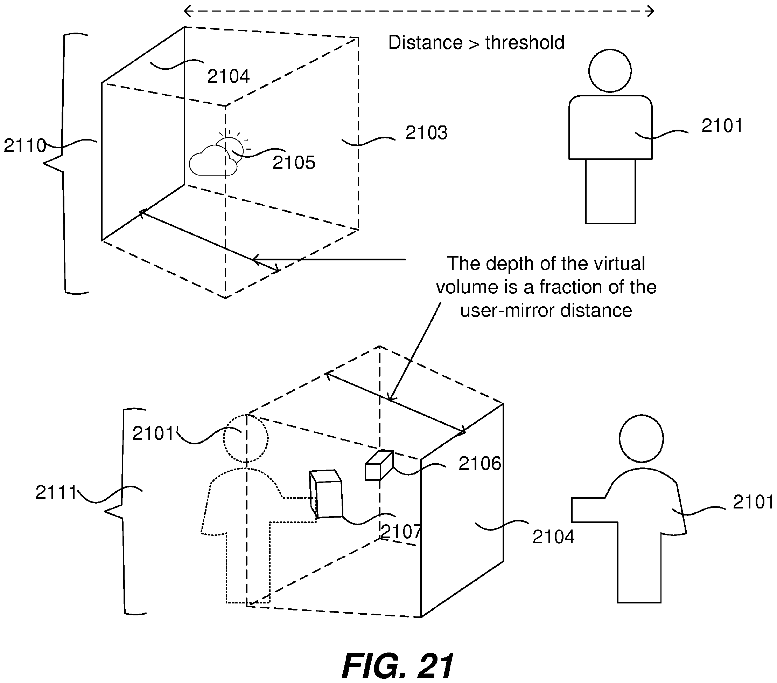

FIG. 21 shows a user case of a smart mirror system according to the claimed invention. In this user case, object is presented as being in front of a mirror while user stands far away from the mirror (the object being focused on a focal plane in front of the mirror), and object is presented as being behind the mirror while user stands near the mirror (the object being focused on a focal plane behind the mirror). When it is identified that the user 2101 stands far away from the mirror 2104 (distance > a preset threshold, system enters into a non-interactive mode 2110), the object 2105 is presented as a 3D object placed in front of the mirror as being seen by the user. If it is identified that the user 2101 stands near the mirror 2104 (distance < a preset threshold, system enters into an interactive mode 2111), the system may present richer UI with more elements shown (e.g. 2106) and allows interaction (e.g. 2107 being presented as being placed on the hand of user's own reflection 2101' as seen by the user 2101). Notice that the depth of the virtual volume may be a fraction of the user-mirror distance.

In the interactive mode scenario, the focal point (LCD plane) and vergence point (holographics) are always near, thus it is attempted to limit the risk of visual discomfort due to accommodation and vergence disparity.

The system as illustrated in FIG. 21 comprises three main tasks: input acquisition, interaction and rendering. Technical modules that may be involved for input acquisition include real time depth imaging acquisition, face recognition, and gaze tracking. Technical modules that may be involved for interaction include user's hands and fingers recognition, and user's body tracking. Technical modules that may be involved for the rendering task include 3D engine for modeling the scene, which in fine can emulate the user's subjective view, enrich with virtual content created or loaded for the user, stereoscopic interleaved frame generation that will be displayed on display (e.g. LCD), and parallax barrier generation synchronized with interleaved frame and user head position. The 3D engine creates graphics that can be rendered in 3D, 2D or 2.5D.

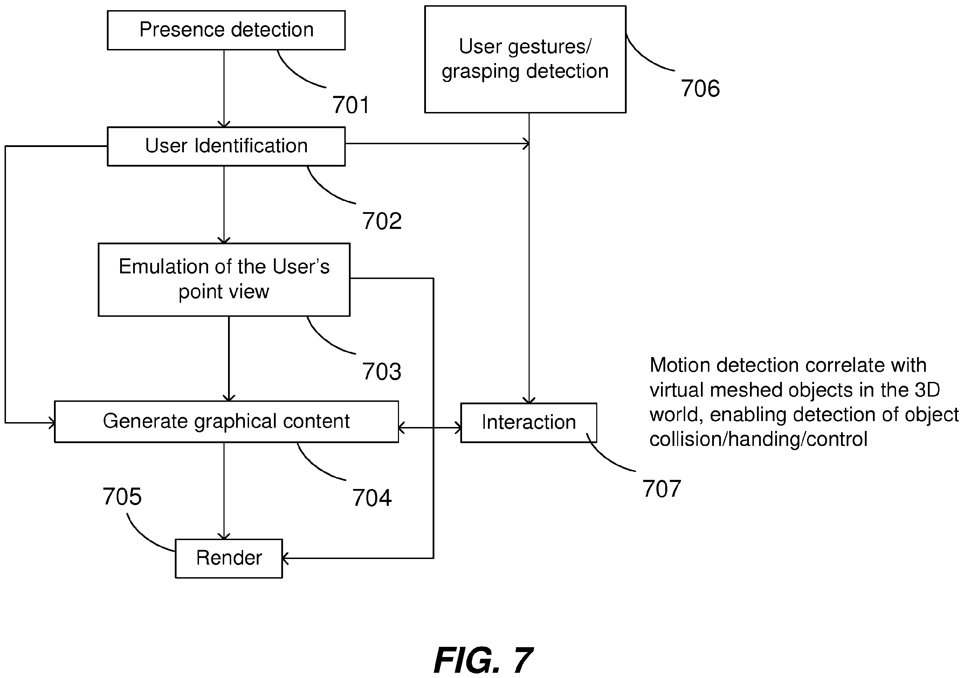

FIG. 7 shows functionalities/modules/algorithms for enabling the SME engine aforementioned in a smart mirror system according to some components of embodiments of this disclosure.

Presence detection 701

When no user is detected in near range of the smart mirror, the system may not display any content, however it is continuously monitoring the presence of a user. Presence detection can be performed using a depth imaging device with a process stage to analyze depth frame in real time to recognize the presence of a human. Human detection can be triggered by a motion detection feature.

User identification 702

When a user is detected, the system may optionally identify the user in order to load personalized contents, calibration and preferences settings. Otherwise the system uses a default preset for any user. User identification is preferably relying on face recognition; however there is no restriction to use alternative methods to identify a person such as means of additional personal devices featuring proximity sensing. Face recognition process benefits from the fact that the user head stands relatively statically in front of the smart mirror, also face recognition can be limited by a minimum height and maximum height. The height range for face recognition can be parameterized through software configuration. Depth data helps discriminating real faces from pictures of the smart mirror, such as portrait frame in the home. RGB-D frames may provide better accuracy in recognizing a person by exploited more facial features. In case user is identified, user's profile can be used for defining gesture control calibration.

Emulation of the user's point of view 703

This stage includes transposing what the User's sees on the mirror in a 3D world (including the User's own reflection).

Virtual cameras positioning

The system may track the user's head position, the eyes and the gaze direction. On a side note, if the system has recognized the user, it can load calibration settings to track the user's gaze of head position more accurately. Calibration settings may contain information such as the eyes separation distance in order to optimize the eyes tracking process.

By determining the head and eyes position, the system translates these positions from the real world coordinate system into a 3D world coordinate system. One virtual camera for each eye has its position tightly coupled with the user's eye position in the real word. The system can estimate eyes position in real space and project virtual cameras into virtual positions in place of the user's eyes emulating a subjective perspective. The computation virtual cameras position relies on the user head distance value, which has been monitored in previous stage thanks to the depth sensor embedded in the smart mirror system. Therefore the distance head to mirror plane is computed using trigonometry, since the position and orientation of the sensor in respect to the mirror plane is fixed and may be calibrated at factory. The eyes height is also known from combining the result of face detection and depth data. The eyes features which have been extracted from a face detection, which can be based on 2D RGB frame processing, is correlated with depth point cloud. The corresponding eyes point cloud may be instantly found and eyes height can be estimated.

In order to reconstruct the subjective scene in the 3D world (i.e. reconstruct in 3D to what the user actually sees through the mirror), the system may apply symmetric projection of the point cloud from the mirror plane. Alternatively, the virtual cameras may be positioned at symmetrical position to the eyes point cloud from the mirror plane. Point cloud may not be symmetrically projected.

The system does not limit to one depth sensor, several depth sensors can be used to optimally cover the user's body with multiple angles.

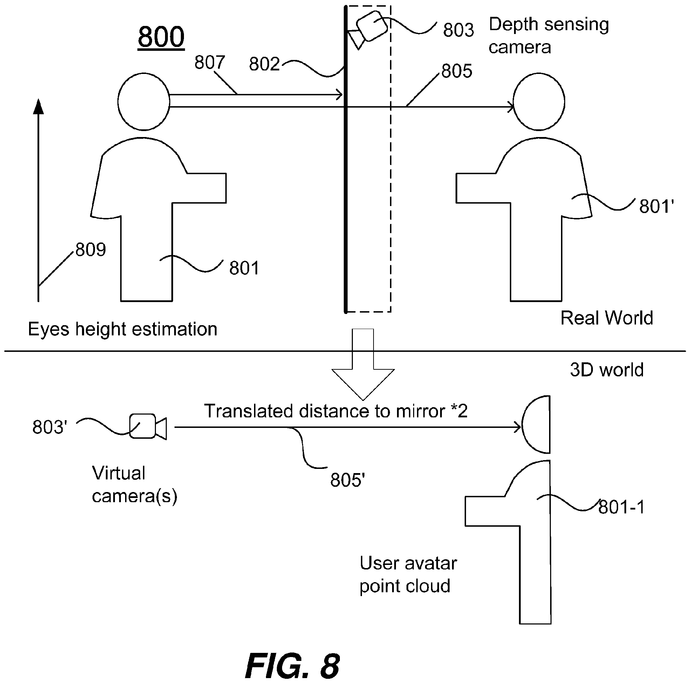

FIG. 8 shows a schematic diagram of a smart mirror system according to some components of an embodiment.

The user 801 stands at distance 807 to the mirror 802. He/she can see the real scene 801' from the mirror at a distance 805 which is double the distance 807. The system 800 can estimate distance 807 and eyes height 809 via camera system 803 (e.g. a depth sensing camera system). The system 800 can then create user avatar point cloud 801-1 in the 3D world. The user avatar is seen by a virtual camera 803' at a distance 805' which is translated from 807 (e.g. 805' is double the distance 807).

Gaze tracking

Gaze tracking is performed after the eyes position is acquired. Gaze estimation may be computed by analyzing the head position and the eyes of the user from RGB-D frames. The resulting gaze vector is used to determine a pyramidal volume of interest corresponding to where the user is currently looking at. The pyramidal volume is used to compute an intersecting area on the mirror plan. One usage of this intersecting area is to enhance rendering on a small but relevant portion of the smart mirror area instead of applying intensive rendering process on a larger and out of scope area. The enhanced rendering process may include applying holographic effects or enhance resolution, or applying some visual cues serving as indication to the user that the system has determined a volume of interest. The visual cues can be implemented with enhanced contrast on objects within the volume of interest, enhancing color effects. For example if the user is looking at the direction of a particular content, the focalized content can start a glowing animation effect, or can be slightly gliding towards the user's avatar reflection. Another usage of gaze tracking data is to delimit a subjective mono-user holographic rendering. The size of the pyramid may be determined by configurable horizontal and vertical field of view expressed as angles. In natural binocular vision, human eyes cover about 114 degrees horizontally (with both eyes) and 135 degrees vertically. Therefore the system may not exceed these values. The system may dynamically adapt the field of view parameters according to the user's distance to the mirror. As such the applied field of view may increase as the user is nearer to the smart mirror. This correlation between field of view and user distance can be exploited in the purpose of adapting immersion effect by applying visual enhancements on a greater or smaller area of the mirror depending if the user is near or far from the mirror. The area outside can be used for other users simultaneously as long as these subjective areas do not overlap. Tracking gaze vectors for multiple users helps detecting if such conflict occurs by detecting areas overlap.

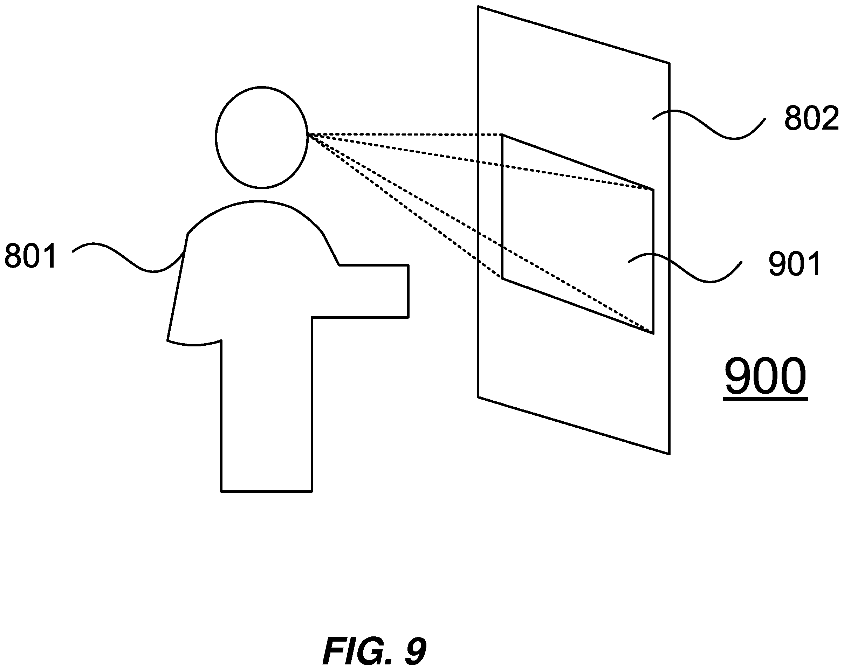

FIG. 9 shows a schematic diagram of a smart mirror system according to some aspects of an embodiment.

The system 900 applies gaze tracking technologies to estimate area of interest to a user 801. Optionally the system can apply enhanced graphics effects in the estimated area 901 from various aspects, e.g. resolution, animation effects, color, contrast.

## User's avatar in 3D engine

The system acquires depth imaging frame continuously to track the user's body whose resulting points cloud is inserted into a 3D world. As such the user has an avatar representation in the 3D world, however this avatar may be not rendered. Its purpose is to allow interaction with virtual objects which are rendered.

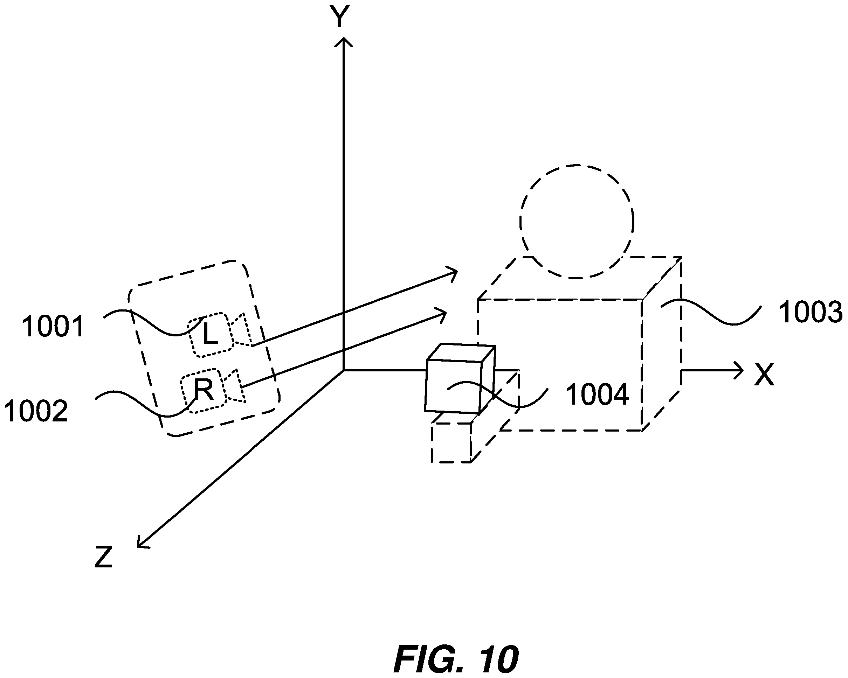

FIG. 10 shows a schematic diagram of creating user's avatar by a smart mirror system according to some aspects of an embodiment. The user's body 1003 is modeled (e.g. by aforementioned SME engine) into the 3D world but not rendered on the output display. Such an avatar is created to interact with virtual objects 1004.

## Generate graphical contents 704

### a) Preserving a comfortable viewing

The visual discomfort when viewing autostereoscopic content is known as the accommodation versus vergence conflict. This conflict has implications with the human visual system. According to a study, the natural vision induces a correlation between the accommodation dynamics and the vergence dynamics. As a recall, accommodation is the action of the eye to focus on an object at near or far distance; vergence is the movement of both eyes to converge to an object at near or far distance. In the case of computer generated stereoscopic graphics, the digital graphics are displayed at a fixed focal point on a screen (e.g. a LCD screen), however rendered 3D objects may be virtually placed at variable distance from the user's point of view, causing vergence movement of the eyes. According to a study, there is a tolerance range regarding the accommodation and vergence disparity within which stereo images can be viewed without visual discomfort. Also according to a study, when the user is far from the screen, viewing stereoscopic content which appears in front of the screen is a more comfortable experience than viewing content that appear behind the screen plane. Inversely, when the user is near the screen, it is more comfortable to see stereoscopic content behind the screen plane.

### b) Content hierarchy

The system runs applications that display a set of interactive virtual objects. These interactive objects can either be rendered with holographic or pseudo perspective effects. The objects rendered with holographic effects are preferably virtually positioned between the user's reflection and the mirror plane. Limiting the holographic effects to place the virtual objects between user's reflection and mirror plane is software configurable and this parameter can be superseded by per user settings. Optimally, holographic objects are located on the lower part of the smart mirror conveniently for the user so that objects can be grasped or touched by the user's hands or fingers.

The system may dynamically adjust the lower part area (where holographic objects are displayed) to be below the user's head reflection, from the user's point of view, whereas the upper part area occupies the rest of the display. The system may estimate the user's hands maximum reach distance from either the user's height or from the detection of hands and forearms. This estimation may be computed from generic considerations based on human morphology or be more specific to a user by detecting features like forearms and hands. The maximum reach distance serves to determine a 3 dimensional space range where the interactive objects should be positioned in the 3D world. As such, the interactive objects always appear at reach range from the user, accordingly to the user's position in space and morphological attributes.

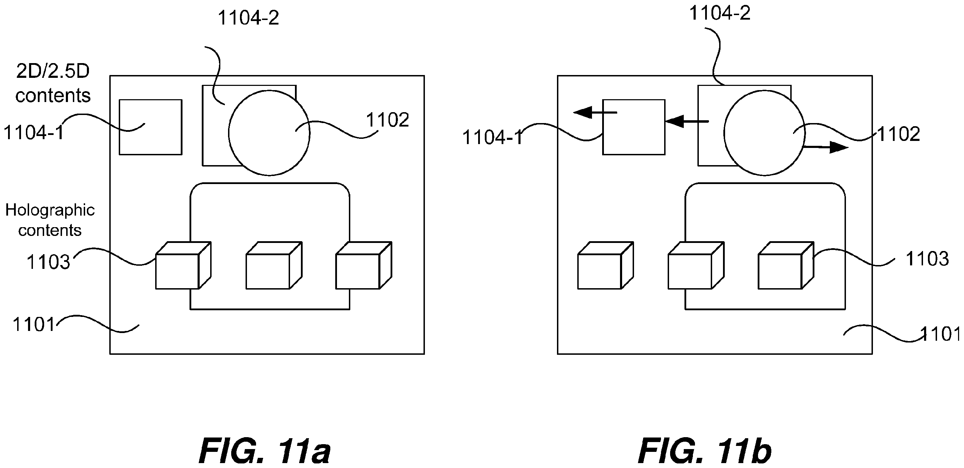

Figures 11a-11c show content hierarchy mechanisms provided by a smart mirror system according to some aspects of embodiments of this disclosure.

In FIG. 11a, the user 1102 sees the smart mirror UI delimited into 2 parts. The upper part is used to display information which appears behind the user with no autostereoscopic effects (e.g. text 1104-1, text and graphics 1104-2). The lower part is used to display holographic objects 1103 that the user 1102 may interact with by touching the mirror 1101 (e.g. touch sensitive mirror) or grasping on the fly (with the help of gesture/skeleton/motion detection mechanism not shown).

In FIG. 11b, as the user 1102 leans/moves left or right, the smart mirror system may emulate a pseudo perspective effect by synchronizing 2D position of multi-layered contents (e.g. text 1104-1, text and graphics 1104-2) thus giving the user of the impression of depth.

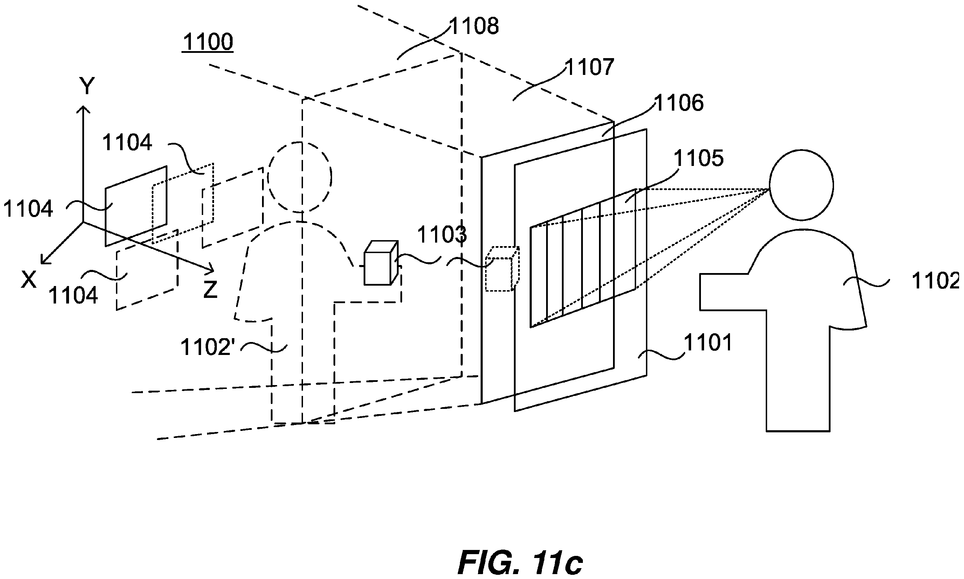

In FIG. 11c, parallax pattern(s) is generated at intersection of a gaze vector and parallax plane 1105. Flat 2D contents 1104 are placed along the Z axis. Flat content 1104 may move slightly on the X and Y axis according to the user's head position, thus giving the user a 2.5D impression. The display 1106 works with the mirror and the parallax barrier to give the user the impression of the existence of volume 1108 enabling 2D or 2.5D content 1104 and volume 1107 enabling holographic content 1103. Notice that in a case the user 1102 stands close to the mirror, the virtual object 1103 appears to the user as presented between the mirror plane and the user's self-reflection 1102'.

The objects rendered in pseudo perspective effect may be located on the upper part of the smart mirror display so that content appear behind the head of the user. Because the user's head position is tracked, pseudo perspective is achieved thanks to a responsive multilayered rendering of the content. The positions of the composing layers are updated in synchronization with the user's head movement, proportionally to the Z axis order, so that furthest layers appear more static than nearest layers. In order to achieve convincing effect that content appear behind the user, the content may appear clipped by the user's reflection. This is achieved thanks the user's avatar in the 3D world which occludes the pixels of the content not to render.

Interaction 707

Because holographic rendering is enabled at near range of the smart mirror, the user may perceive sharp virtual object along with physical reflection near the smart mirror plane (e.g. the hands of the user). This allows the user to manipulate virtual objects through the user's self-reflection, serving here as a visual reference of what is manipulating the objects. By utilizing the user's natural reflection, there may be no need to render a visual pointer. Also this mode of interactivity takes into account limiting the visual discomfort (due to accommodation and vergence disparity). By the fact that focal point (e.g. where LCD is) and vergence point (e.g. where the holographics seem to appear) are in near plans, thus within human visual tolerance range in regards to accommodation vs vergence disparity.

The system is continuously acquiring depth frames which produces a point cloud that is inserted into the 3D world, this point cloud can directly interact with any object in the 3D world. It is advisable that the 3D engine (e.g. SME 410) incorporates a physics engine to enhance realistic effects like objects collision, friction and velocity. Without the need to detect specific human features, the system detects virtual contact from arbitrary shapes to interact with augmented reality objects. For example the user could touch virtual objects using a pen or other pointing device. Grasping or two fingers pinching can be detected with at least two zones of contact on distinct faces of a cube for example. Here are examples of possible interactions: grasping or pinching, squeezing or compressing, stretching, touching, hitting, and throwing.

However, the system may support more elaborated interactions which implies recognizing hand gestures. In this case, it is necessary to detect hands and fingers and process to categorize the gesture. Because the system has already detected the user's head or face, the system correlates with human morphology knowledge to scope detection of arms, hand, fingers to certain portions of the depth frames. The system may search for hands which are located between the user's head and the smart mirror surface; and search for hand size which is scaled relatively to the head size. With hands and fingers detected, the system can categorize gestures, whether gestures are static or gestures involve a movement. Here are examples of hands gesture the system could recognize: scissor cutting, thumb up/down, showing numbers, and OK/STOP/PAUSE hand signs.

Combining with gaze tracking

To improve interaction accuracy, the system can utilize gaze tracking to scope a volume of interest. The volume of interest has a shape of a pyramid with its peak is oriented towards user's head. This volume of interest helps discriminating which objects user is intending to interact with. The virtual objects included in the volume can appear highlighted with graphical or animation effects or can be rendered with an increased resolution.

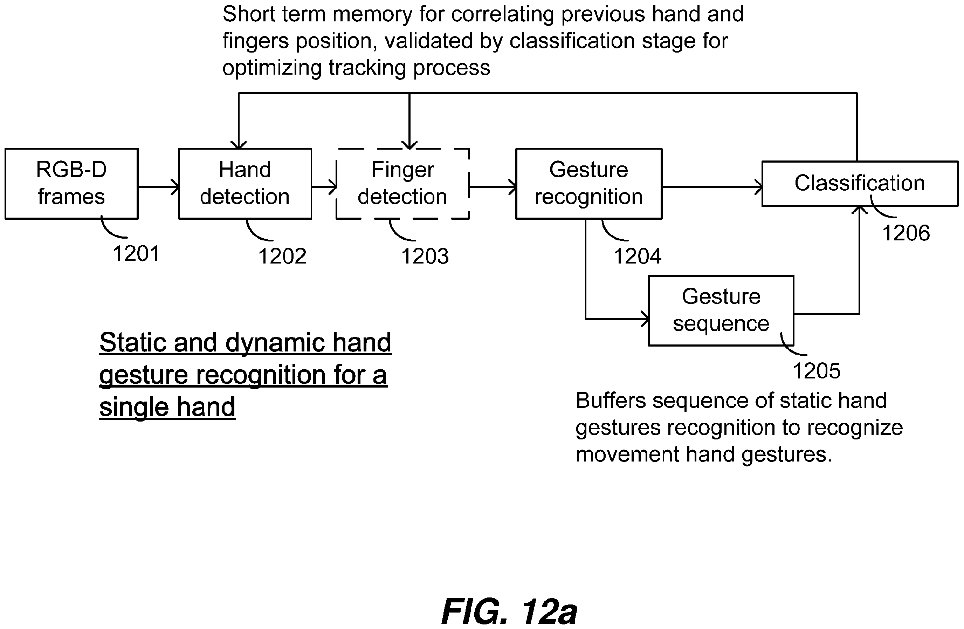

FIGs. 12a-12b show schematic diagrams ot an algorithm tor gesture recognition according to some aspects related to embodiments of this disclosure.

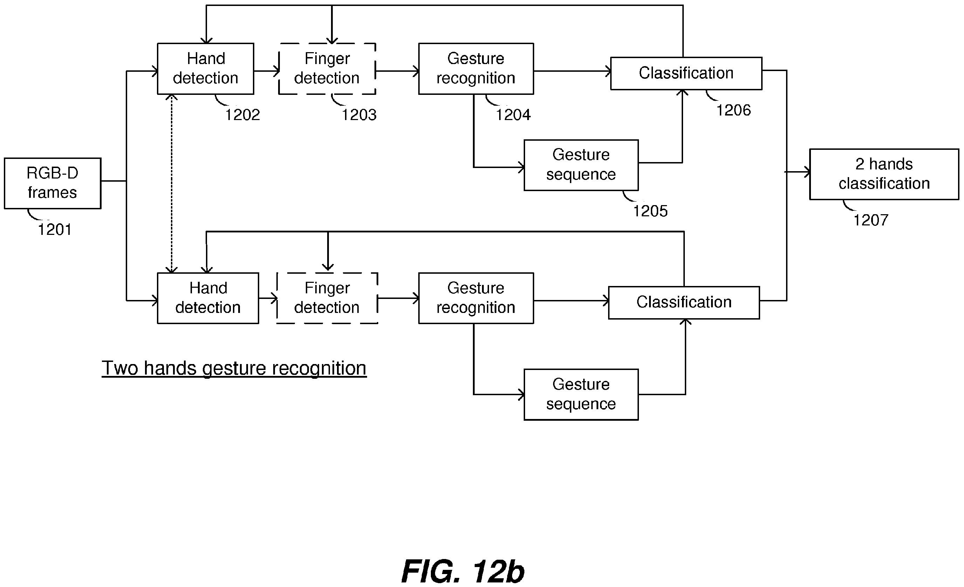

FIG. 12a shows how the system can perform static and dynamic hand gesture recognition for a single hand. FIG. 12b shows how the system can perform hand gesture recognition for two single hands. A two-hand gesture recognition would typically be processing the above hand gesture recognition in parallel with a final classification stage. Hands detection may not be performed on distinct areas of the RGB-D input frames, because some dynamic gestures may involve temporally occluding one hand by the other, for such case, it is possible to discriminate the occluding hand from the occluded hand by correlating the depth position of the hands from the previous detections.

Rendering 705

Rendering preferably creates a holographic effect for objects that appear between the mirror plane and the user's self-reflection. This preference is intended for reducing potential visual discomfort caused by accommodation and vergence conflict. Holographic effects may be applied on the lower part of the smart mirror, at contact range of the user's hands reflection. The upper part of the smart mirror may be devoted to content which appear behind the user's self-reflection. The user's self-reflection may occluded the contents on the upper part of the smart mirror. These content may be rendered either in 2D pseudo perspective or holographic effects, not simultaneously. The reason for this variability is the potential visual discomfort which is greater as accommodation-vergence disparity increases as holographic objects appear far, whereas the user's eyes may be accommodated to the fixed RGB display behind the smart mirror surface. The user can parameterize how upper part contents are rendered. In order to produce the effect that content appear behind the user's self-reflection, contents may be occluded by the user's point cloud. The system may segmentize the point cloud which belongs to the user's body from the point cloud that belong to the environment of the user, such as furniture. This segmentization process is performed with the knowledge of the head position. The system may discard all points that are further that the head global position. In the 3D world, the system can determine how to partially occlude virtual content which have depth values greater than the avatar's head. The user's point cloud may not be rendered.

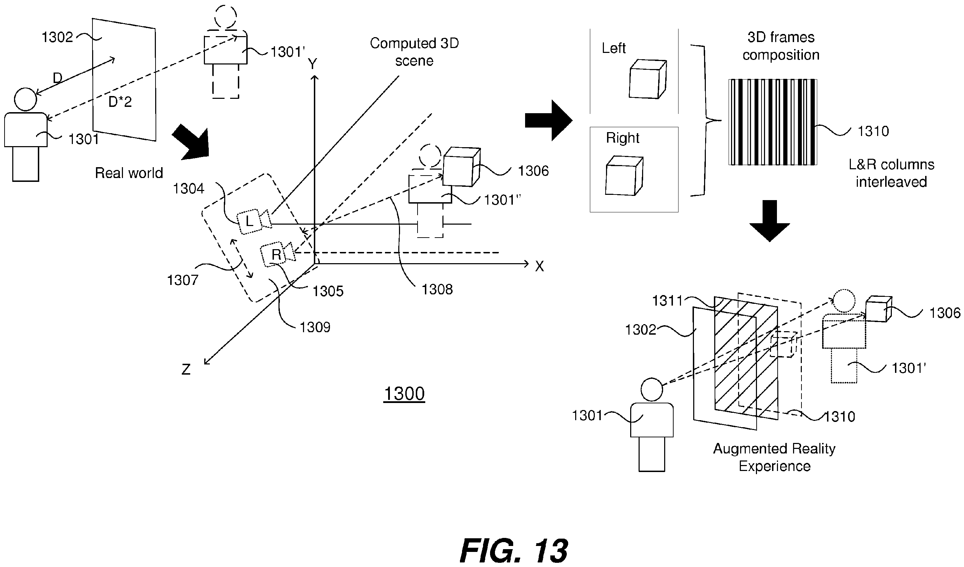

In the 3D world, the system has previously computed the position and orientation of two virtual cameras, each one representing the perspective of each eye. From two synchronized frames for each perspective, the system generates an interleaved RGB frame that is directly displayed on the LCD. Meanwhile, in synchronization, the system generates a parallax barrier pattern which is computed relatively to the user's head position. FIG. 13 depicts the rendering process for holographic content. For non 3D pseudo perspective effect, only one perspective camera may be exploited, and the corresponding frames may be directly displayed on the LCD.

FIG. 13 shows a schematic diagram of a smart mirror system according to some aspects of an embodiment.

The system provides 3D acquisition and rendering. The system may use depth scanning (e.g. supported by camera system not shown) to enabling the computing device (e.g. the aforementioned SME) to have a 3D representation of the environment. Then the system can display a 3D scene which incorporates parameters from the real scene. The distance 1307 between the 2 cameras 1304, 1305 (in 3D world) can be adjusted by acquiring the user's face distance and perceived distance between the user's eyes. The 3D positioning 1309 of the cameras is determined from a face tracking process. Distance "d" 1308 between the cameras and a 3D object 1306 can be adjusted by acquiring the user's face distance. For example: d = (2*D) * scaleFactor + offset. The display 1310 shows the object on the display. With the help of the mirror 1302 and autostereoscopic means 1311, an holographic object 1306 appears to the user on the same focal distance as the person's reflection 1301'.

Light detection

The system may include source light detection in order to increase realism when rendering objects by applying a virtual source light that emulates the real environment lighting conditions. The purpose is to emulate the shadow effect on virtual objects which correlates to the user's point of view and light conditions. Object surfaces rendering can also be enhanced according to the detected light conditions. The light source(s) needs to be localized and an emulation of such light sources can be performed in the virtual world.

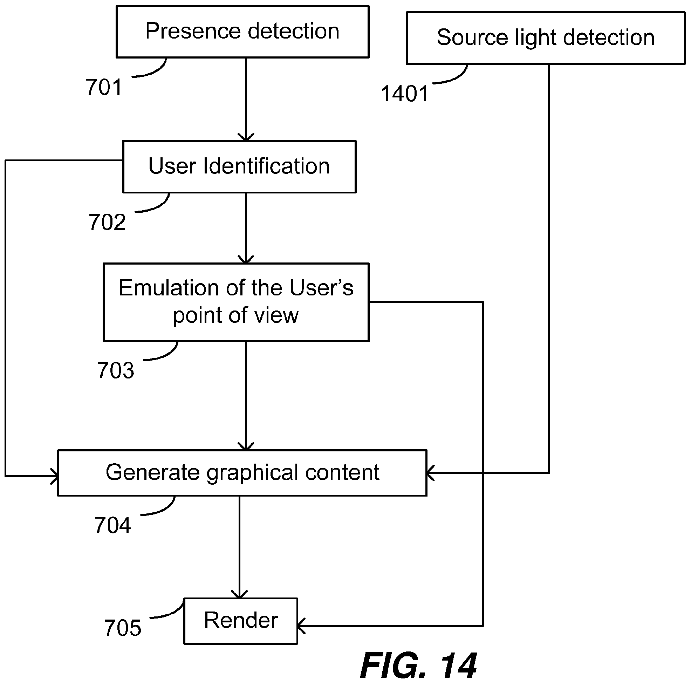

FIG. 14 shows a schematic diagram of a smart mirror system according to some aspects of an embodiment with source light detection functionality. Figure 14 builds on figure 7. The steps already described with reference to figure 7 (indicated with equal reference numbers) will not be described again.

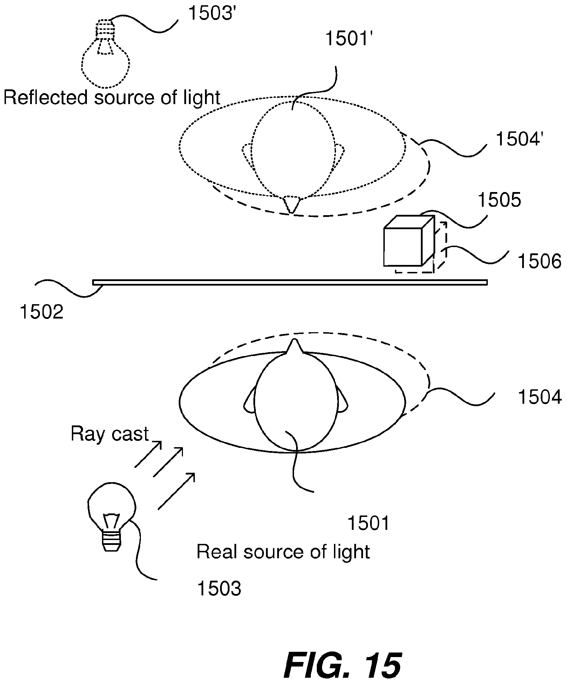

FIG.15 shows a user case of a smart mirror system according to some aspects of an embodiment. The system can detect real source of light and emulate shadow 1506 for virtual object 1505. The user 1501 may experience an improved augmented reality when looking at the mirror 1502. Notice that in a case the user 1501 stands close to the mirror 1502, the virtual object 1505 appears to the user 1501 as presented between the mirror plane and the user's self-reflection 1504'.

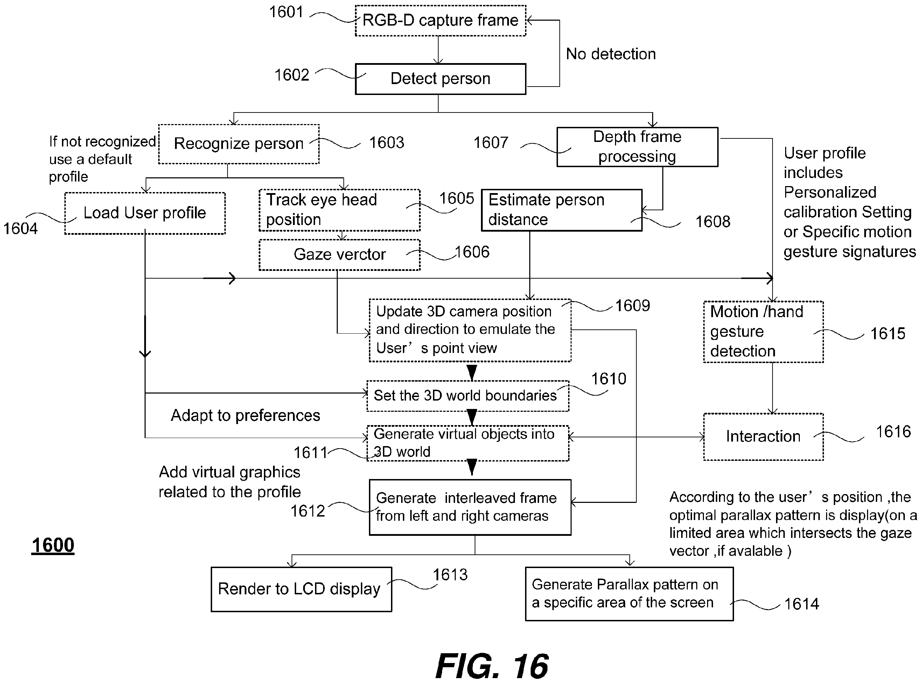

FIG. 16 shows a schematic diagram describing the functioning of a smart mirror system according to some aspects of an embodiment. Notice this figure illustrates various functionalities/means/modules/algorithms, any combination thereof is within the scope of this disclosure as long as any specific combination does not depart principle(s) of this proposed disclosure. Dotted box represents optional feature(s) which may be selectively omitted in a specific feature combination as appreciated by a person skilled in the art. A description of the various functions is provided below:

Block 1601: Optionally, a RGB-D capture frame is generated;

Block 1602: Whether or not a person is detected;
Block 1603: Optionally, the person is recognized;
Block 1604: Optionally, a user profile is loaded;
Block 1605: Optionally, eye and/or head position is tracked;
Block 1606: Optionally, a gaze vector is generated;
Block 1607: perform depth frame processing;
Block 1608: distance of the person is estimated;
Block 1609: Optionally, update 3D camera position and direction to emulate the user's point view;
Block 1610: Optionally, set the 3D world boundaries;
Block 1611: Optionally, generate virtual objects into 3D world;
Block 1612: generate interleaved frame from left and right cameras;
Block 1613: render to a display;
Block 1614: generate parallax pattern on a specific area of the display;
Block 1615: motion/hand gesture detection;
Block 1616: interaction.

A convincing augmented reality may be in 3D meaning that the superposed virtual objects may be rendered in 3D. However, in some cases, this 3D rendering is not always possible. Nevertheless, 2D and 2.5D graphics can bring interesting technical effect that enhances the user experience. These techniques will be used when the 3D rendering is not pertinent or not possible.

✔ 2D graphics can also be a choice of simplicity (the intention is not the realism but the usefulness).
✔ 2.5D graphics can be a good substitution of 3D realization.

2D graphic engine (may be incorporated into SME)

A first set of graphics focuses on 2D rendering. It is important not to compromise the primary functions of the mirror and particularly do not create interference between virtual and the reflected user face. Thanks to the computer vision processing, the head can be tracked and define a forbidden display area in which the virtual object are excluded. Virtual object can be rearranged dynamically according the user position and specially its head. Another interesting effect is to dynamically set the level of detail of the displayed 2D virtual object according to the user position. For example, a user close to the mirror will set a high level of detail of a weather widget (additional information such as temperature, weather forecast). This optimizes the virtual object placement, size and details according to the user distance and head position. It could be also interesting to load a set of object according to the user preference. It allows displaying the user virtual objects after a face recognition processing.

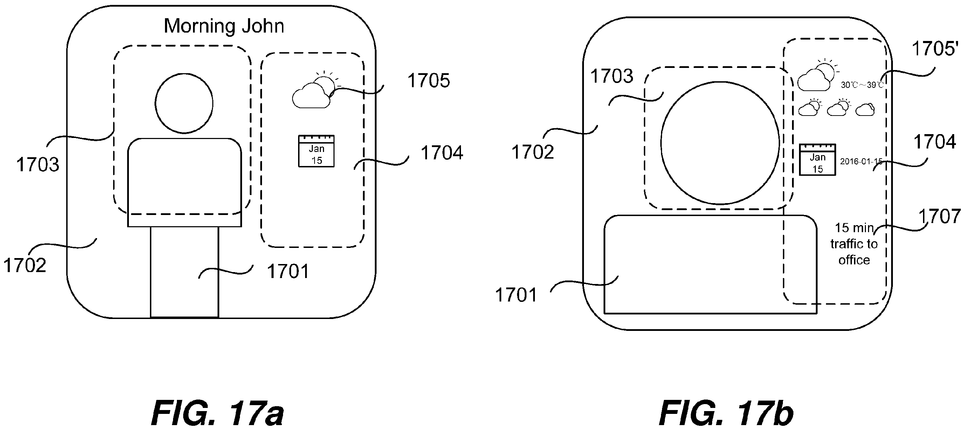

FIGs. 17a-17b show a user case of a smart mirror system according to some aspects of an embodiment. In this user case, displayed content rearranges in accordance with user's distance to mirror, e.g. the closer the user, the more detail to be shown. When user 1701 stands in front of the mirror/display 1702 (see FIG. 17a), area 1703 is not used to display information to avoid blocking user's own reflection. Area 1704 is used to display information (e.g. sets of widget 1705) to the user. When the user 1701 approaches the mirror/display 1702 (see FIG. 17b), content shown in the area 1704 may be dynamically arranged, e.g. more detail to shown 1705', or more widget to shown 1707. Area 1703 may also be dynamically arranged according to user's head position.

In other embodiments, to reinforce the sensation of an active interaction between user and virtual objects, an object can gain or lose focus according to the gaze tracking or hand pointing.

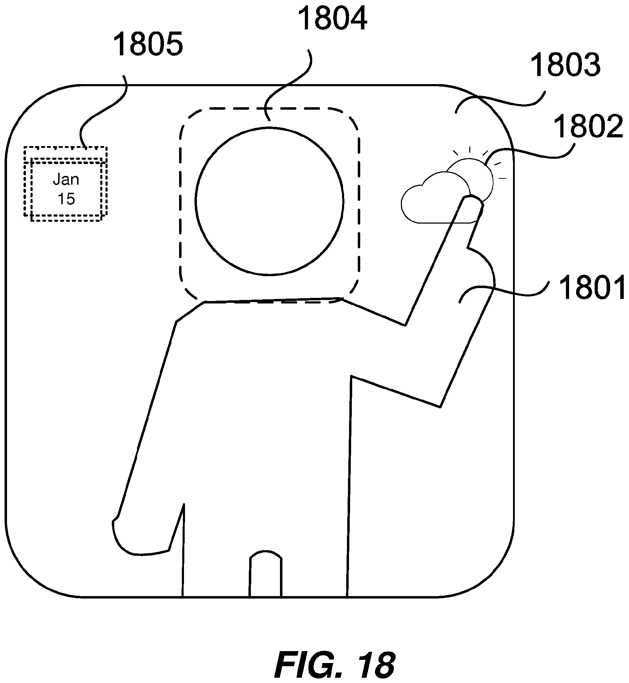

FIG. 18 shows a user case of a smart mirror system according to some aspects of an embodiment. In this user case, when user's point of interest is identified, such point of interest can be focused. Other points may be blurred due to lose of focus. For example, it is identified that area/widget/object 1802 is user's point of interest, 1802 may become focused (e.g. rendered sharper). Other point/area/widget/object 1805 may become blurred/invisible. Optionally, area 1804 is not used to display information to avoid blocking user's own reflection.

In other embodiments, according to gesture recognition (e.g. point & push), focused object can be enlarged/shrink and get full size view/minimized. Gesture recognition is a topic in computer science with the goal of interpreting human gestures via mathematical algorithms. Gesture recognition enables humans to communicate with the machine (HMI) and interact naturally without any mechanical devices. Using the concept of gesture recognition, it is possible to point a finger at the computer screen so that the cursor will move accordingly. Various camera mechanisms may be used to support gesture recognition, e.g. depth-aware camera, stereo camera. Using specialized cameras such as structured light or time-of-flight cameras (a.k.a. depth-aware cameras), one can generate a depth map of what is being seen through the camera at a short range, and use this data to approximate a 3d representation of what is being seen. These can be effective for detection of hand gestures due to their short range capabilities. Using two cameras whose relations to one another are known (a.k.a. stereo cameras), a 3d representation can be approximated by the output of the cameras. To get the cameras' relations, one can use a positioning reference such as a lexian-stripe or infrared emitters. In combination with direct motion measurement (6D-Vision) gestures can directly be detected.

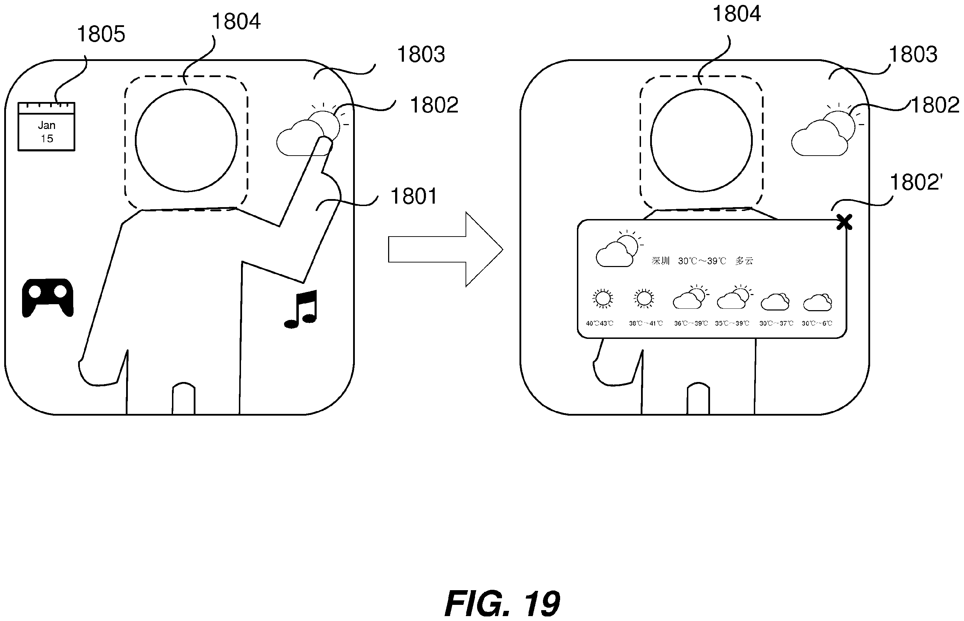

FIG. 19 shows a user case of a smart mirror system according to some aspects of an embodiment. In this user case, when user's gesture is recognized, point of interest can be enlarged to show more detail, or be closed. For example, it is identified that area/widget/object 1802 is user's point of interest, then 1802 may be enlarged. Other point/area/widget/object 1805 may become blurred/invisible. Optionally, area 1804 is not used to display information to avoid blocking user's own reflection.

2.5D graphic engine (may be incorporated into SME)

A second set of graphics can leverage the 2.5D rendering. It is based on object positioning in a perspective build on the user position. Object can then be positioned in different plan and then offering a pseudo 3D view. The focus technique can also be applied with gaze or hand tracking.

Two and a half dimensional (shortened to 2.5D, nicknamed three-quarter perspective and pseudo-3D) is a term used to describe either 2D graphical projections and similar techniques used to cause images or scenes to simulate the appearance of being three-dimensional (3D) when in fact they are not, or gameplay in an otherwise three-dimensional video game that is restricted to a two-dimensional plane or has a virtual camera with a fixed angle. By contrast, games using 3D computer graphics without such restrictions are said to use true 3D.

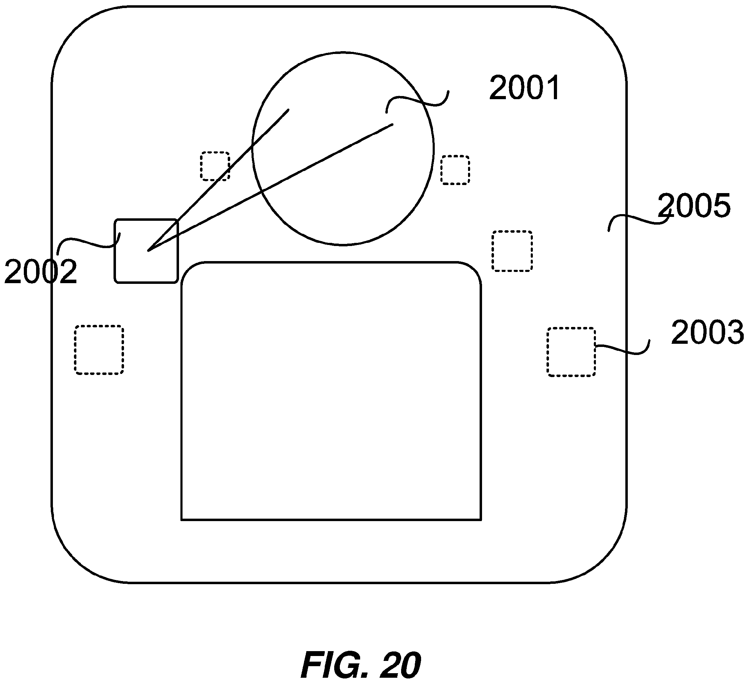

FIG. 20 shows a user case of a smart mirror system according to some aspects of an embodiment. In this user case, objects can be positioned in different planes to offer a pseudo 3D view. For example, it is identified that object of attention is 2002, then 2002 is to be seen as being placed to the front plane (optionally sharper, or gain focus). Other objects 2003 may be seen as being placed to back planes (optionally blurred, or arranged into user's perspective). Pseudo 3D can be reinforced thanks to a parallax rendering based on the user motion. It gives a sensation of floating and 3D objects. Parallaxing refers to when a collection of 2D sprites or layers of sprites are made to move independently of each other and/or the background to create a sense of added depth.

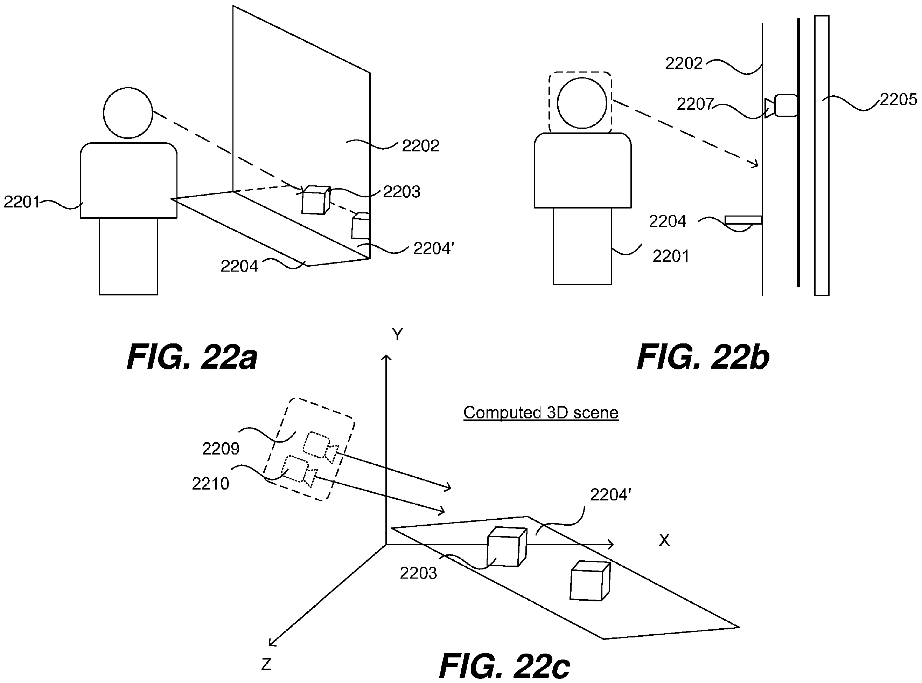

FIGs 22a-22c show a user case of a smart mirror system according to some aspects of an embodiment. In this user case, a holographic object can be presented as being on a static surface reflection. For example, user 2201 may perceive holographic objects 2203 on a static surface such as a shelf 2204 in front of the mirror 2202 (e.g. see FIG. 22a). The perspective rendering of virtual objects is adjusted to the height sight of the user, so that virtual objects seem to be laid on the surface of the (reflected) shelf 2204'. The shelf may originally be part of the system structure, therefore its structural parameters are known by the computing device in the system. This knowledge is used to render computed holograms onto a "physical" object reflection. The user can interact accurately with the virtual objects while keeping a visual reference to the user's reflection. Face coordinates and gaze vector may be correlated to the perspective camera(s) 2207 positioning and orientation in the computed 3D world. The camera(s) 2207 may simulate the user's subjective point of view (e.g. see FIG. 22b). The shelf plane 2204' is represented in the 3D computer world but not rendered on the output display 2205 (e.g. see FIG. 22c). A physics engine may be used to simulate physical properties of virtual objects 2203 (cubes falling / rolling on a surface).

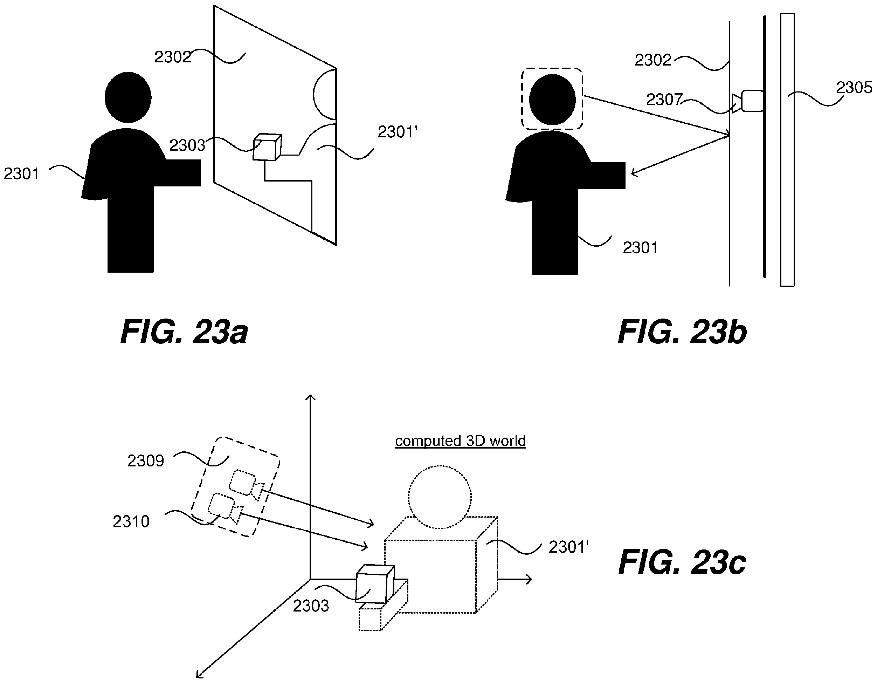

FIGs 23a-23c show a user case of a smart mirror system according to some aspects of an embodiment. In this user case, the user perceives holographic objects interacting with non-static physical body (e.g. user's moving hand). For example, user 2301 raises his/her hand while standing in front of the mirror 2302. He perceives object 2303 interacting with the hand in harmony with his/her own reflection 2301' (see FIG. 23a). Face coordinates and gaze vector(s) are correlated to the perspective camera(s) 2307 positioning and orientation in the computed 3D world. The camera(s) 2307 can simulate the user's subjective point of view (see FIG. 23b). The user's body 2301' can be modeled in the 3D world but not rendered on the output display 2305. Its purpose is to interact with virtual object(s) 2303 (see FIG. 23c).

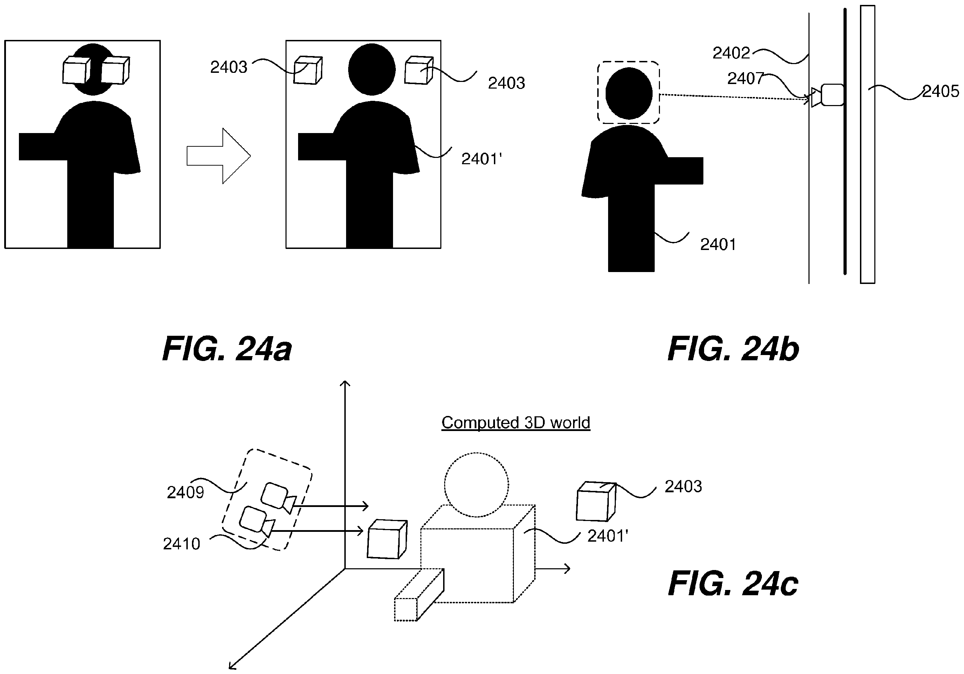

FIGs 24a-24c show a user case of a smart mirror system according to some aspects of an embodiment. In this user case, virtual object(s) 2403 on the display 2405 is automatically positioned not to block the user's own reflection 2401'. For example, if the system detects that the user 2401 moves and virtual object(s) 2403 on the display 2405 may block the user's own reflection 2401', virtual object(s) 2403 on the display 2405 may be automatically positioned not to block the user's own reflection 2401' (see FIG. 24a). Face coordinates and gaze vector(s) are correlated to the perspective camera(s) 2307 positioning and orientation in the computed 3D world. The camera(s) 2307 can simulate the user's subjective point of view (see FIG. 24b). The user's body 2301' can be modeled in the 3D world but not rendered on the output display 2305. Its purpose is to interact with virtual object(s) 2303 (see FIG. 24c).

FIG. 25 shows a schematic diagram of a smart mirror system having a curved display surface according to some aspects of an embodiment. In other embodiments, smart mirror systems may use a planar display surface. In this embodiment, curved display surface 2502 is used. For example, the display surface 2502 may have a semicircle-shaped surface, a parabolic surface, etc. Virtual objects 2503 may be presented as being arrayed around the user 2501. Further, the user 2501 may rotate his or her head (or his or her entire body) to interact with different virtual objects 2503. Directions of attention of the user may be detected and used by the system to automatically rearrange/render virtual objects 2503.

FIG. 26 shows a smart mirror system aforementioned in various embodiments being applied to various display means. For example, in a vehicle 2601, a smart mirror system aforementioned can be applied to windshield 2604, a rear-view mirror 2602, or a portable display device 2603. Practically, any glass means that a user may use during the day may apply smart mirror mechanism proposed by this disclosure, e.g. glass tables/windows/glass whiteboards in restaurants, offices, schools, and at home.

Representative Computing functionality

FIG. 27 sets forth illustrative computing functionality 2700 that can be used for implementation of any of the smart mirror system described above. In one case, the computing functionality 2700 may correspond to any type of computing device that includes one or more processing devices. In all cases, the computing functionality 2700 represents one or more physical and tangible processing mechanisms.

The computing functionality 2700 can include volatile and non-volatile memory, such as RAM 2702 and ROM 2704, as well as one or more processing devices 2706 (e.g., one or more CPUs, and/or one or more GPUs, etc.). The computing functionality 2700 also optionally includes various media devices 2708, such as a hard disk module, an optical disk module, and so forth. The computing functionality 2700 can perform various operations identified above when the processing device(s) 2706 executes instructions that are maintained by memory (e.g., RAM 2702, ROM 2704, or elsewhere).

More generally, instructions and other information can be stored on any computer readable medium 2710, including, but not limited to, static memory storage devices, magnetic storage devices, optical storage devices, and so on. The term computer readable medium also encompasses plural storage devices. In many cases, the computer readable medium 2710 represents some form of physical and tangible entity. The term computer readable medium also encompasses propagated signals, e.g., transmitted or received via physical conduit and/or air or other wireless medium, etc. However, the specific terms "computer readable storage medium" and "computer readable medium device" expressly exclude propagated signals per se, while including all other forms of computer readable media.

The computing functionality 2700 also includes an input/output module 2712 for receiving various inputs (via input devices 2714), and for providing various outputs (via output devices). Illustrative input devices include a keyboard device, a mouse input device, a touchscreen input device, a gesture input device, a voice recognition mechanism, an image capture mechanism, a tracking mechanism, and so on. One particular output mechanism may include a presentation device 2716; that device, in turn, may correspond to a component of the above-described mirror functionality. The computing functionality 2700 can also include one or more network interfaces 2720 for exchanging data with other devices (e.g., provided in other set-ups) via one or more communication conduits (not shown). One or more communication buses communicatively couple the above-described components together.

The communication conduit(s) can be implemented in any manner, e.g., by a local area network, a wide area network (e.g., the Internet), etc., or any combination thereof. The communication conduit(s) can include any combination of hardwired links, wireless links, routers, gateway functionality, name servers, etc., governed by any protocol or combination of protocols.

Alternatively, or in addition, any of the functions described in the preceding sections can be performed, at least in part, by one or more hardware logic components. For example, without limitation, the computing functionality can be implemented using one or more of: Fieldprogrammable Gate Arrays (FPGAs); Application-specific Integrated Circuits (ASICs); Application-specific Standard Products (ASSPs); System-on-a-chip systems (SOCs); Complex Programmable Logic Devices (CPLDs), etc.

**Claims**

1. A method in a system (400) for interacting with a user (101) via a mirror (405), said system (400) comprising a display (401), the mirror (405), a processing sub-system (409) and a camera arrangement (407), the mirror (405) being a two-way reflective mirror configured to reflect a real scene to a user (101), and to pass through information displayed to the user by the display (401), the mirror (405) being arranged between the user (101) and the display (401), **characterized by** comprising:

    receiving, by the processing sub-system (409), first input data provided by the camera arrangement (407);
    detecting, by the processing sub-system (409) and using the first input data, the user (101) standing at a first distance away from the mirror (405), the first distance being greater than a preset threshold;
    in response to detecting the user (101) standing at the first distance away from the mirror (405), displaying, by the processing sub-system (409), a first object (2105) on the display according to the detected first distance, the first object (2105) being focused on a focal plane in front of the mirror (405), the display (401) being placed behind the mirror (405);
    receiving, by the processing sub-system (409), a second input data provided by the camera arrangement (407);
    detecting, by the processing sub-system (409) and using the second input data, the user (101) standing at a second distance away from the mirror (405), the second distance being smaller than the preset threshold; and
    in response to detecting the user (101) standing at the second distance away from the mirror (405), displaying, by the processing sub-system (409), a second object (2106, 2107) on the display (401) according to the detected second distance, the second object (2106, 2107) being focused on a focal plane behind the mirror (405), and the second object (2106, 2107) being presented as being interactive with the user's (101) own reflection in the mirror (405).

2. The method of claim 1, wherein the second object is different from the first object.

3. The method of claim 1, wherein the second object is the same as the first object.

4. The method of any preceding claims, wherein the second object is presented as being available within reach range from the user (101).

5. The method of any preceding claims, further comprising:
adjusting an autostereoscopy arrangement for presenting the first object and/or the second object in accordance with the first distance and/or the second distance.

6. The method of any preceding claims, wherein the first object and/or the second object is displayed in consideration of any one or any combination of the following: proximity of the user (101) to the mirror (405), proximity of an eye of the user (101) to the mirror (405), and proximity of a head of the user (101) to the mirror (405).

7. The method of any preceding claims, further comprising any one or any combination of the following:

estimating of eyes separation distance of the user (101);
face detecting of the user (101);
presence detecting of the user (101);
gaze tracking of the user (101); and
motion detecting of the user (101).

8. The method of claim 7, further comprising:
adjusting presentation of the first object and/or the second object in accordance with any one or any combination of the following:

estimating of eyes separation distance of the user (101);
face detecting of the user (101);
presence detecting of the user (101);
gaze tracking of the user (101); and
motion detecting of the user (101).

9. A system (400), comprising:

a display (401) configured to display information;
a mirror (405) being a two-way reflective mirror configured to reflect a real scene to a user (101), and to pass through information displayed to the user by the display (401), wherein the mirror (405) is arranged between the user and the display (401);
a camera arrangement (407); a processing sub-system (409); and
**characterized by** the processing sub-system (409) being configured to:

receive first input data provided by the camera arrangement (407);
detect the user standing at a first distance away from the mirror using the first input data, the first distance being greater than a preset threshold;
in response to detecting the user (101) standing at the first distance away from the mirror (405), control the display (401) to display a first object (2105) according to the first distance, the first object (2105) focused on a focal plane in front of the mirror (405);
receive a second input data provided by the camera arrangement (407);
detect the user standing at a second distance away from the mirror using the second input data, the second distance being smaller than the preset threshold; and in response to detecting the user (101) standing at the second distance away from the mirror (405), control the display (401) to display a second object (2106, 2107) according to the second distance, the second object (2106, 2107) being focused on a focal plane behind the mirror (405), and the second object (2106, 2107) being presented as being interactive with the user's (101) own reflection in the mirror (405).

10. The system of any preceding system claims, wherein the processing sub-system is configured to adjust an autostereoscopy arrangement for presenting the first object and/or the second object in accordance with the first distance and/or the second distance.

11. The system of any preceding system claims, wherein the processing sub-system is further configured to perform any one or any combination of the following: estimation of eyes separation distance of the user (101), face detection of the user (101), presence detection of the user (101), gaze tracking of the user (101), and motion detection of the user (101).

**Patentansprüche**

1. Verfahren in einem System (400) zum Interagieren mit einem Benutzer (101) über einen Spiegel (405), wobei das System (400) eine Anzeige (401), den Spiegel (405), ein Verarbeitungsuntersystem (409) und eine Kameraanordnung (407) umfasst, wobei der Spiegel (405) ein reflektierender Einwegspiegel ist, der dazu konfiguriert ist, eine reale Szene an einen Benutzer (101) zu reflektieren und Informationen, die dem Benutzer durch die Anzeige (401) angezeigt werden, durchzulassen, wobei der Spiegel (405) zwischen dem Benutzer (101) und der Anzeige (401) angeordnet ist, **gekennzeichnet dadurch, dass** es Folgendes umfasst:

Empfangen, durch das Verarbeitungsuntersystem (409), erster Eingangsdaten, die durch die Kameraanordnung (407) bereitgestellt werden; Erkennen, durch das Verarbeitungsuntersystem (409) und Verwenden der ersten Eingangsdaten, dass der Benutzer (101) in einem ersten Abstand von dem Spiegel (405) entfernt steht, wobei der erste Abstand größer als ein voreingestellter Schwellenwert ist; als Reaktion auf das Erkennen, dass der Benutzer (101) in dem ersten Abstand von dem Spiegel (405) entfernt steht, Anzeigen, durch das Verarbeitungsuntersystem (409), eines ersten Objekts (2105) auf der Anzeige gemäß dem erkannten ersten Abstand, wobei das erste Objekt (2105) auf einer Fokusebene vor dem Spiegel (405) fokussiert wird, wobei die Anzeige (401) hinter dem Spiegel (405) platziert ist; Empfangen, durch das Verarbeitungsuntersystem (409), von zweiten Eingangsdaten, die durch die Kameraanordnung (407) bereitgestellt werden; Erkennen, durch das Verarbeitungsuntersystem (409) und Verwenden der zweiten Eingangsdaten, dass der Benutzer (101) in einem zweiten Abstand von dem Spiegel (405) entfernt steht, wobei der zweite Abstand kleiner als der voreingestellte Schwellenwert ist; und als Reaktion auf das Erkennen, dass der Benutzer (101) in dem zweiten Abstand von dem Spiegel (405) entfernt steht, Anzeigen, durch das Verarbeitungsuntersystem (409), eines zweiten Objekts (2106, 2107) auf der Anzeige (401) gemäß dem erkannten zweiten Abstand, wobei das zweite Objekt (2106, 2107) auf einer Fokusebene hinter dem Spiegel (405) fokussiert wird und das zweite Objekt (2106, 2107) als interaktiv mit einer eigenen Reflektion des Benutzers (101) in dem Spiegel (405) dargestellt wird.

2. Verfahren nach Anspruch 1, wobei sich das zweite Objekt von dem ersten Objekt unterscheidet.

3. Verfahren nach Anspruch 1, wobei das zweite Objekt dasselbe wie das erste Objekt ist.

4. Verfahren nach einem der vorhergehenden Ansprüche, wobei das zweite Objekt als innerhalb einer Reichweite des Benutzers (101) verfügbar dargestellt wird.

5. Verfahren nach einem der vorhergehenden Ansprüche, das ferner Folgendes umfasst:
Anpassen einer Autostereoskopieanordnung zum Darstellen des ersten Objekts und/oder des zweiten Objekts gemäß dem ersten Abstand und/oder dem zweiten Abstand.

6. Verfahren nach einem der vorhergehenden Ansprüche, wobei das erste Objekt und/oder das zweite Objekt unter Berücksichtigung eines beliebigen oder einer beliebigen Kombination der Folgenden angezeigt wird: Nähe des Benutzers (101) zu dem Spiegel (405), Nähe eines Auges des Benutzers (101) zu dem Spiegel (405) und Nähe eines Kopfes des Benutzers (101) zu dem Spiegel (405).

7. Verfahren nach einem der vorhergehenden Ansprüche, das ferner ein beliebiges Folgendes oder eine beliebige Kombination der Folgenden umfasst:

Schätzen des Augentrennungsabstandes des Benutzers (101); Gesichtserkennen des Benutzers (101); Anwesenheitserkennen des Benutzers (101); Blickverfolgen des Benutzers (101); und Bewegungserkennen des Benutzers (101).

8. Verfahren nach Anspruch 7, das ferner Folgendes umfasst:
Anpassen einer Darstellung des ersten Objekts und/oder des zweiten Objekts gemäß eines beliebigen oder einer beliebigen Kombination der Folgenden:

Schätzen des Augentrennungsabstandes des Benutzers (101); Gesichtserkennen des Benutzers (101); Anwesenheitserkennen des Benutzers (101); Blickverfolgen des Benutzers (101); und Bewegungserkennen des Benutzers (101).

9. System (400), das Folgendes umfasst:

eine Anzeige (401), die konfiguriert ist, um Informationen anzuzeigen; einen Spiegel (405), der ein reflektierender Einwegspiegel ist, der konfiguriert ist, um eine reale Szene an einen Benutzer (101) zu reflektieren und Informationen, die dem Benutzer durch die Anzeige (401) angezeigt werden, durchzulassen, wobei der Spiegel (405) zwischen dem Benutzer und der Anzeige (401) angeordnet ist; eine Kameraanordnung (407); ein Verarbeitungsuntersystem (409); und
**gekennzeichnet dadurch, dass** das Verarbeitungsuntersystem (409) für Folgendes konfiguriert ist:

Empfangen erster Eingangsdaten, die durch die Kameraanordnung (407) bereitgestellt werden;
Erkennen unter Verwendung der ersten Eingangsdaten, dass der Benutzer in einem ersten Abstand von dem Spiegel entfernt steht, wobei der erste Abstand größer als ein voreingestellter Schwellenwert ist;
als Reaktion auf das Erkennen, dass der Benutzer (101) in dem ersten Abstand von dem Spiegel (405) entfernt steht, Steuern der Anzeige (401), um ein erstes Objekt (2105) gemäß dem ersten Abstand anzuzeigen, wobei das erste Objekt (2105) auf einer Fokusebene vor dem Spiegel (405) fokussiert wird;
Empfangen zweiter Eingangsdaten, die durch die Kameraanordnung (407) bereitgestellt werden;
Erkennen unter Verwendung der zweiten Eingangsdaten, dass der Benutzer in einem zweiten Abstand von dem Spiegel entfernt steht, wobei der zweite Abstand kleiner als der voreingestellte Schwellenwert ist; und
als Reaktion auf das Erkennen, dass der Benutzer (101) in einem zweiten Abstand von dem Spiegel (405) entfernt steht, Steuern der Anzeige (401), um ein zweites Objekt (2106, 2107) gemäß dem zweiten Abstand anzuzeigen, wobei das zweite Objekt (2106, 2107) auf einer Fokusebene hinter dem Spiegel (405) fokussiert wird und das zweite Objekt (2106, 2107) als interaktiv mit einer eigenen Reflektion des Benutzers (101) in dem Spiegel (405) dargestellt wird.

10. System nach einem der vorhergehenden Ansprüche, wobei das Verarbeitungsuntersystem konfiguriert ist, um eine Autostereoskopieanordnung zum Darstellen des ersten Objekts und/oder des zweiten Objekts gemäß dem ersten Abstand und/oder dem zweiten Abstand anzupassen.

11. System nach einem der vorhergehenden Systemansprüche, wobei das Verarbeitungsuntersystem ferner konfiguriert ist, um ein beliebiges oder eine beliebige Kombination der Folgenden durchzuführen: Schätzen des Augentrennungsabstandes des Benutzers (101), Gesichtserkennung des Benutzers (101), Anwesenheitserkennung des Benutzers (101), Blickverfolgung des Benutzers (101) und Bewegungserkennung des Benutzers (101).

**Revendications**

1. Procédé dans un système (400) permettant une interaction avec un utilisateur (101) par l'intermédiaire d'un miroir (405), ledit système (400) comprenant un dispositif d'affichage (401), le miroir (405), un sous-système de traitement (409) et un agencement d'appareil de prise de vues (407),

le miroir (405) étant un miroir réfléchissant bidirectionnel conçu pour
réfléchir une scène réelle à un utilisateur (101), et pour transmettre des informations affichées à l'utilisateur par le dispositif d'affichage (401), le miroir (405) étant disposé entre l'utilisateur (101) et le dispositif d'affichage (401),
**caractérisé en ce qu'il** comprend :

la réception, par le sous-système de traitement (409), des premières données d'entrée fournies par l'agencement d'appareil de prise de vues (407) ;
la détection, par le sous-système de traitement (409) et à l'aide des premières données d'entrée, de l'utilisateur (101) se tenant à une première distance du miroir (405), la première distance étant supérieure à un seuil prédéfini ;
en réponse à la détection de l'utilisateur (101) se tenant à la première distance du miroir (405), l'affichage, par le sous-système de traitement (409), d'un premier objet (2105) sur le dispositif d'affichage selon la première distance détectée, le premier objet (2105) étant focalisé sur un plan focal devant le miroir (405), le dispositif d'affichage (401) étant placé derrière le miroir (405) ;
la réception, par le sous-système de traitement (409), des secondes données d'entrée fournies par l'agencement d'appareil de prise de vues (407) ;
la détection, par le sous-système de traitement (409) et à l'aide des secondes données d'entrée, de l'utilisateur (101) se tenant à une seconde distance du miroir (405), la seconde distance étant inférieure au seuil prédéfini ; et
en réponse à la détection de l'utilisateur (101) se tenant à la seconde distance du miroir (405), l'affichage, par le sous-système de traitement (409), d'un second objet (2106, 2107) sur le dispositif d'affichage (401) selon la seconde distance détectée, le second objet (2106, 2107) étant focalisé sur un plan focal derrière le miroir (405), et le second objet (2106, 2107) étant présenté comme étant interactif avec le propre reflet de l'utilisateur (101) dans le miroir (405).

**2.** Procédé selon la revendication 1, le second objet étant différent du premier objet.

**3.** Procédé selon la revendication 1, le second objet étant le même que le premier objet.

**4.** Procédé selon l'une quelconque des revendications précédentes, le second objet étant présenté comme étant disponible à portée de l'utilisateur (101).

**5.** Procédé selon l'une des revendications précédentes, comprenant en outre :
l'ajustement d'un agencement d'autostéréoscopie permettant la présentation du premier objet et/ou du second objet conformément à la première distance et/ou à la seconde distance.

**6.** Procédé selon l'une quelconque des revendications précédentes, le premier objet et/ou le second objet étant affiché en tenant compte de l'un ou plusieurs parmi : la proximité de l'utilisateur (101) par rapport au miroir (405), la proximité d'un l'œil de l'utilisateur (101) par rapport au miroir (405) et la proximité d'une tête de l'utilisateur (101) par rapport au miroir (405).

**7.** Procédé selon l'une quelconque des revendications précédentes, comprenant en outre l'un ou plusieurs parmi :

l'estimation de la distance de séparation des yeux de l'utilisateur (101) ;
la détection du visage de l'utilisateur (101) ;
la détection de présence de l'utilisateur (101) ;
le suivi du regard de l'utilisateur (101) ; et
la détection de mouvement de l'utilisateur (101).

**8.** Procédé selon la revendication 7, comprenant en outre :
le réglage de la présentation du premier objet et/ou du second objet conformément à l'un ou plusieurs parmi :

l'estimation de la distance de séparation des yeux de l'utilisateur (101) ;
la détection du visage de l'utilisateur (101) ;
la détection de présence de l'utilisateur (101) ;
le suivi du regard de l'utilisateur (101) ; et
la détection de mouvement de l'utilisateur (101).

**9.** Système (400), comprenant :

un dispositif d'affichage (401) configuré pour afficher des informations ;
un miroir (405) étant un miroir réfléchissant bidirectionnel conçu pour réfléchir une scène réelle à un utilisateur (101), et pour transmettre des informations affichées à l'utilisateur par le dispositif d'affichage (401), le miroir (405) étant disposé entre l'utilisateur et le dispositif d'affichage (401) ;
un agencement d'appareil de prise de vues (407) ; un sous-système de traitement (409) ; et **caractérisé en ce que** le sous-système de traitement (409) étant configuré pour:

recevoir les premières données d'entrée fournies par l'agencement d'appareil de prise de vues (407) ;
détecter l'utilisateur se tenant à une première distance du miroir à l'aide des premières données d'entrée, la première distance étant supérieure à un seuil prédéfini ;
en réponse à la détection de l'utilisateur (101) se tenant à la première distance du miroir (405), commander le dispositif d'affichage (401) pour afficher un premier objet (2105) selon la première distance, le premier objet (2105) étant focalisé sur un plan focal devant le miroir (405) ;
recevoir des secondes données d'entrée fournies par l'agencement d'appareil de prise de vues (407) ;
détecter l'utilisateur se tenant à une seconde distance du miroir à l'aide des secondes données d'entrée, la seconde distance étant inférieure au seuil prédéfini ; et
en réponse à la détection de l'utilisateur (101) se tenant à la seconde distance du miroir (405), commander le dispositif d'affichage (401) pour afficher un second objet (2106, 2107) selon la seconde distance, le second objet (2106, 2107) étant focalisé sur un plan focal derrière le miroir (405), et le second objet (2106, 2107) étant présenté comme étant interactif avec le propre reflet de l'utilisateur (101) dans le miroir (405).

**10.** Système selon l'une quelconque des revendications précédentes, le sous-système de traitement étant configuré pour régler un agencement d'autostéréoscopie permettant la présentation du premier objet et/ou du second objet conformément à la première distance et/ou à la seconde distance.

**11.** Système selon l'une quelconque des revendications précédentes, le sous-système de traitement étant en outre configuré pour effectuer l'un ou plusieurs parmi :
l'estimation de la distance de séparation des yeux de l'utilisateur (101), la détection du visage de l'utilisateur (101), la détection de présence de l'utilisateur (101), le suivi du regard de l'utilisateur (101) et la détection de mouvement de l'utilisateur (101).

Computer generated graphics underlaid

LCD screen

Two way mirror

Person's own reflection

13

Spacing 13 between the 2 surfaces is fixed.

10

11

12

**FIG. 1**

EP 3 642 692 B1

**FIG. 2**

EP 3 642 692 B1

FIG. 3

## 400

Top View

Cameras 407

Display Area

Mirror 405

Front View

FIG. 4

EP 3 642 692 B1

Display 511

Dpixel (distance between left and right pixel)

← → 502

L R L R L R L R L R L R L R L R L R

501

508

506

507

504

505

503

$$\frac{D_{eye}}{D_{user}} = \frac{D_{pixel}}{D_{parallax}}$$

Deye
(distance between eyes)

Dparallax
(distance LCD
- parallax)
509

Duser
(distance
user-parallax)
510

*FIG. 5a*

## FIG. 5b

EP 3 642 692 B1

DISPLAY

509 fixed

Parallax barrier

506

508

503

504

$D_{user}$
(distance user-parallax)

507

No longer constant

510

$$\frac{D_{eye}}{D_{user}} = \frac{D_{pixel}}{D_{parallax}}$$

503

504 No longer constant

*FIG. 5c*

EP 3 642 692 B1

**FIG. 6a**

600

410

401

402

407

405

The user moves, parallax pattern and graphics resolution are automatically adapted

**FIG. 6b**

EP 3 642 692 B1

**FIG. 6c**

EP 3 642 692 B1

**FIG. 6d**

EP 3 642 692 B1

EP 3 642 692 B1

*FIG. 6e*

602

601

Real World

405

402

401

600

601'

606

602'

What the user
sees

What the users see

600

401

402-1

405

602-2'

601-2'

606-2

602-1'

606-1

601-1'

402-2

601-2

602-2

601-1

602-1

Real world

*FIG. 6f*

**FIG. 6g**

EP 3 642 692 B1

**FIG. 7**

EP 3 642 692 B1

**FIG. 8**

801

802

901

**900**

*FIG. 9*

EP 3 642 692 B1

FIG. 10

**FIG. 11b**

**FIG. 11a**

**FIG. 11c**

Short term memory for correlating previous hand and
fingers position, validated by classification stage for
optimizing tracking process

| RGB-D frames | → | Hand detection | → | Finger detection | → | Gesture recognition | → | Classification |

1201    1202    1203    1204    1206

Gesture sequence

1205

Static and dynamic hand
gesture recognition for a
single hand

Buffers sequence of static hand
gestures recognition to recognize
movement hand gestures.

*FIG. 12a*

EP 3 642 692 B1

EP 3 642 692 B1

Two hands gesture recognition

**FIG. 12b**

FIG. 13

EP 3 642 692 B1

```
┌─────────────────────────┐         ┌─────────────────────────┐
│   Presence detection     │         │  Source light detection  │
└─────────────────────────┘         └─────────────────────────┘
           │                                     │
    701 ╰                              1401 ╰     │
           │                                      │
           ▼                                      │
┌─────────────────────────┐                       │
│   User Identification    │                       │
└─────────────────────────┘                       │
           │                                       │
    702 ╰  │                                       │
           │                                       │
           ▼                                       │
┌─────────────────────────┐                        │
│  Emulation of the User's │                        │
│     point of view        │                        │
└─────────────────────────┘                        │
           │                                        │
    703 ╰  │                                        │
           │                                        │
           ▼                                        ▼
┌─────────────────────────────────────────────────────┐
│         Generate graphical content                   │
└─────────────────────────────────────────────────────┘
           │
    704 ╰  │
           ▼
        ┌─────────┐
    705 │ Render  │◄──────
        └─────────┘
```

**FIG. 14**

EP 3 642 692 B1

1503'

1501'

Reflected source of light

1504'

1505

1506

1502

1504

Ray cast

1501

Real source of light

1503

**FIG. 15**

EP 3 642 692 B1

1601 — RGB-D capture frame

No detection

1602 — Detect person

Recognize person — 1603

1607 — Depth frame processing

User profile includes Personalized calibration Setting or Specific motion gesture signatures

If not recognized use a default profile

1604 — Load User profile

Track eye head position — 1605

Estimate person distance — 1608

Gaze verctor — 1606

Update 3D camera position and direction to emulate the User's point view — 1609

Motion /hand gesture detection — 1615

Adapt to preferences

Set the 3D world boundaries — 1610

Generate virtual objects into 3D world — 1611

Interaction — 1616

Add virtual graphics related to the profile

Generate interleaved frame from left and right cameras — 1612

According to the user's position ,the optimal parallax pattern is display(on a limited area which intersects the gaze vector ,if avalable )

1600

Render to LCD display — 1613

Generate Parallax pattern on a specific area of the screen — 1614

**FIG. 16**

*FIG. 17b*

*FIG. 17a*

**FIG. 18**

EP 3 642 692 B1

Jan 15

1805 1804 1803 1802 1801

FIG. 19

FIG. 20

FIG. 21

**FIG. 22a**

**FIG. 22b**

Computed 3D scene

**FIG. 22c**

EP 3 642 692 B1

FIG. 23a

FIG. 23b

FIG. 23c

computed 3D world

*FIG. 24b*

*FIG. 24c*

*FIG. 24a*

**FIG. 25**

EP 3 642 692 B1

**FIG. 26**

EP 3 642 692 B1

FIG. 27

EP 3 642 692 B1

## REFERENCES CITED IN THE DESCRIPTION

**Patent documents cited in the description**

- US 20160093081 A1
- US 20170188020 A1

- US 20160343166 A1

**Non-patent literature cited in the description**

- **DIEGO MARTINEZ PLASENCIA.** *Through the combining glass*